# EUROPÄISCHE PATENTSCHRIFT

(11) **EP 1 271 680 B1**
(45) Veröffentlichungstag und Bekanntmachung des Hinweises auf die Patenterteilung: **03.12.2008**
(21) Anmeldenummer: 02008623.7
(22) Anmeldetag: 17.04.2002
(51) Int. Cl.: H01M 8/04, H01M 16/00

(54) **Brennstoffzellensystem und Verfahren zur zeitgesteuerten Inbetriebnahme/Ausserbetriebnahme eines Brennstoffzellensystems**
Fuel cell system and method for time-controlled start-up / shut-down of a fuel cell system
Système de piles à combustible et méthode temporisé pour le démarrage / l'arrêt d'un système de piles à combustible

(30) Priorität: 31.05.2001 DE 10127599
(43) Veröffentlichungstag der Anmeldung: 02.01.2003
(73) Patentinhaber: Deutsches Zentrum für Luft- und Raumfahrt e.V., 51147 Köln (DE)
(72) Erfinder: Brinner, Andreas, 71277 Rutesheim (DE)
(74) Vertreter: Hoeger, Stellrecht & Partner Patentanwälte

(56) Entgegenhaltungen:
- EP-A- 0 633 158
- EP-A- 1 071 573
- EP-A- 1 263 069
- US-A- 5 645 950

## Beschreibung

Die Erfindung betrifft ein Brennstoffzellensystem, umfassend einen oder mehrere Brennstoffzellenblöcke, in denen chemische Energie in elektrische Energie umwandelbar ist, welche an einen Verbraucher abgebbar ist, und eine Hilfsenergiequelle, welche die Hilfsenergie zur Inbetriebnahme des Brennstoffzellensystems bereitstellt.

Ferner betrifft die Erfindung ein Verfahren zur Inbetriebnahme/Außerbetriebnahme eines Brennstoffzellensystems, welches einen oder mehrere Brennstoffzellenblöcke umfaßt, in denen chemische Energie in elektrische Energie umgewandelt wird, bei dem die zur Inbetriebnahme benötigte Hilfsenergie von einer Hilfsenergiequelle des Brennstoffzellensystems bereitgestellt wird und eine automatische Umschaltung auf einen Energieabgabebetrieb eines Brennstoffzellenblocks erfolgt.

Für den Einsatz eines Brennstoffzellensystems als Energieversorger auf verschiedenen Anwendungsgebieten ist es wünschenswert, daß die elektrische Leistung skalierbar ist, beispielsweise im Bereich zwischen 0,01 bis ca. 1 kW, so daß dasselbe Konzept der Ausbildung eines Brennstoffzellensystems für verschiedene Leistungsanforderungen verwendbar ist. Ferner ist es wünschenswert, daß ein solches Brennstoffzellensystem weitgehend autonom arbeitet.

Solche Brennstoffzellensysteme lassen sich dann beispielsweise bei Bodenreinigungsgeräten mit eigenem Antrieb, Rollstühlen mit elektrischem Antrieb, für tragbare Stromversorger oder als Starterbatterieersatz für Kraftfahrzeuge und Flugzeuge einsetzen.

Aus der US 5,645,950 ist ein Verfahren zum Betreiben einer Vorrichtung bekannt, welche die Ausgabe eines Luft verbrauchenden Brennstoffzellensystems kontrolliert. Es wird dabei basierend auf der Messung eines Brennstoffzellenstroms ein gewünschter Wert für den Luftvolumenstrom bestimmt und ein tatsächlicher Wert des Luftvolumenstroms auf den gewünschten Wert eingestellt. Der Druck in einem Kathodenraum der Brennstoffzelle wird auf einen vorbestimmten Arbeitsdruck eingestellt.

Aus der EP 0 633 158 A1 ist ein Fahrzeug mit elektrischer Antriebseinheit und mit einer Brennstoffzelle bekannt, wobei in deren Zuführleitung ein mit Hilfe eines Elektromotors angetriebener Kompressor zur Verdichtung des Oxidant-Massenstroms angeordnet ist und die Antriebseinheit und der Elektromotor für den Kompressor von der Brennstoffzelle mit elektrischer Energie versorgt werden. Zum Antrieb des Kompressormotors ist zusätzlich ein Anlassermotor vorgesehen, der von einer Starterbatterie mit Spannung versorgt wird.

Aus der WO 99/54159 ist ein Verfahren zum Starten einer Brennstoffzellenanlage mit einem Brennstoffzellenstapel, einem Verdichter zum Zuführen eines Betriebsmittels zum Brennstoffzellenstapel und einem Elektromotor zum Antrieb des Verdichters bekannt, bei dem der Elektromotor zunächst mit Strom aus einer Starterbatterie und dann mit Strom aus dem Brennstoffzellenstapel gespeist wird.

Der Erfindung liegt die Aufgabe zugrunde, ein Brennstoffzellensystem zu schaffen, welches sich auf einfache Weise betreiben läßt.

Diese Aufgabe wird bei dem eingangs genannten Brennstoffzellensystem erfindungsgemäß dadurch gelöst, daß ein Schalter vorgesehen ist, mittels welchem das Brennstoffzellensystem von Energieaufnahme aus der Hilfsenergiequelle in einen Energieabgabebetrieb eines Brennstoffzellenblocks umschaltbar ist, daß eine Zeitsteuerungsvorrichtung vorgesehen ist, mittels welcher auf den Energieabgabebetrieb nach Inbetriebnahme des Brennstoffzellensystems umschaltbar ist, und daß die Zeitsteuerungsvorrichtungen den Schalter zur Umschaltung auf Energieabgabebetrieb steuert, wobei ein voreingestellter Zeitraum nach Einleitung der Inbetriebnahme bis zum Umschalten auf Energieabgabebetrieb durch das Erreichen von fest vorgegebenen Zuführungsparametern von Brennstoff und Oxidator zu einem Brennstoffzellenblock bestimmt ist.

Ein Brennstoffzellensystem umfaßt selber Energieverbraucher, wie beispielsweise einen Luftverdichter zur Luftzuführung zu einem Brennstoffzellenblock, wenn Luftsauerstoff als Oxidator eingesetzt wird, und eine Kühlungsvorrichtung für den oder die Brennstoffzellenblöcke. Wird das Brennstoffzellensystem gestartet, d. h. die Inbetriebnahme eingeleitet, dann müssen diese Energieverbraucher entsprechend mit Energie versorgt werden. Um ein Brennstoffzellensystem als autonomen elektrischen Energieerzeuger verwenden zu können, ist die Hilfsenergiequelle vorgesehen, die eben die "Startenergie" bereitstellt, um das Brennstoffzellensystem in einen Leistungsbetrieb überführen zu können. Durch den Schalter zur Umschaltung auf den eigentlichen Energieabgabebetrieb läßt sich dieser eigentliche Betriebsmodus des Brennstoffzellensystems nach Beendigung des Inbetriebnahmevorgangs schalten und insbesondere läßt es sich erreichen, daß auf den Energieabgabebetrieb automatisch umgeschaltet wird. Der Energieabgabebetrieb ist dabei ein Energieabgabebetrieb bezüglich eines externen Verbrauchers und auch bezüglich internen Verbrauchern, denen dann die benötigte elektrische Energie von dem oder den Brennstoffzellenblöcken selber bereitgestellt wird.

Insbesondere läßt sich dann erfindungsgemäße eine "Ein-Knopf-Steuerung" zur Inbetriebnahme/Außerbetriebnahme des Brennstoffzellensystem ausbilden; beispielsweise läßt sich durch Betätigen eines einzigen Schalters, welcher extern betätigbar ist, beispielsweise direkt durch manuelle Bedienung eines Benutzers oder gesteuert durch den externen Verbraucher selber, das Brennstoffzellensystem in seinen Leistungsbetrieb hochfahren. Entsprechend läßt sich das Brennstoffzellensystem abschalten, d. h. von seinem Leistungsbetrieb herunterfahren.

Es ist eine Zeitsteuerungsvorrichtung vorgesehen, mittels welcher auf den Energieabgabebetrieb nach Inbetriebnahme des Brennstoffzellensystems umschaltbar ist. Da die Parameter des Inbetriebnahmevorgangs definiert festliegen, kann nach Einleitung der Inbetriebnahme (dem Start des Hochfahrens) mittels der Zeitsteuerungsvorrichtung der Schalter zur Umschaltung auf den Energieabgabebetrieb betätigt werden. Es ist dabei auch zu beachten, daß Komponenten des Brennstoffzellensystems und dabei insbesondere ein Verdichterförderer für die Luftzuführung eine endliche Anlaufzeit benötigen, bis ein stabiler und reproduzierbarer Leerlaufbetrieb im Energieabgabebetrieb erreicht ist.

Es ist dabei ein voreingestellter Zeitraum nach Einleitung der Inbetriebnahme bis zum Umschalten auf Energieabgabebetrieb durch das Erreichen von fest vorgegebenen Zuführungsparametern von Brennstoff und Oxidator zu einem Brennstoffzellenblock bestimmt. Dieser Zeitraum läßt sich durch Vorversuche an einem speziellen Brennstoffzellensystem ermitteln und in der Zeitsteuerungsvorrichtung abspeichern. Diese sorgt dann nach dem Start des erfindungsgemäßen Brennstoffzellensystems dafür, daß weiter in den Energieabgabebetrieb übergegangen wird. Es lassen sich dann bei dem Hochfahren eines Brennstoffzellensystems zwei Stufen unterscheiden, nämlich eine erste Stufe, bei der die Wasserstoffzufuhr und die Luftzuführung zu einem Brennstoffzellenblock freigegeben werden, wobei abgewartet wird, bis sich ein stabiler Zustand einstellt; da aber insbesondere die Inbetriebnahmeparameter fest vorgegeben sind, wird durch die Vorgabe des entsprechenden Zeitraums die Umschaltung bewirkt, ohne daß das Hochfahren selber geregelt werden muß. In einer zweiten Stufe dann, bei welcher auf den Energieabgabebetrieb umgeschaltet wird, kann die Hilfsenergiequelle von den internen Verbrauchern des Brennstoffzellensystems entkoppelt werden und der oder die Brennstoffzellenblöcke selber stellen dann die Energie für die internen Verbraucher bereit.

Zur Ausbildung einer autonomen Energieversorgungseinheit ist es besonders günstig, wenn Energieverbraucher des Brennstoffzellensystems von diesem selber mit Energie versorgt werden. Insbesondere ist dabei ein Luftverdichter des Brennstoffzellensystems von diesem mit Energie versorgbar und ist eine Kühlungsvorrichtung eines Brennstoffzellenblocks von dem Brennstoffzellensystem selber mit Energie versorgbar.

Günstigerweise wird als Brennstoff Wasserstoff und als Oxidator Luftsauerstoff eingesetzt, wobei der Brennstoffzellenblock dann Polymermembran-Brennstoffzellen (PEFC) umfaßt. Bei solchen Brennstoffzellen besteht der Elektrolyt aus einer protonenleitenden Folie. Diese Membran übernimmt gleichzeitig neben der Funktion des Elektrolyten auch eine Katalysatorträgerfunktion für die anodischen und kathodischen Elektrokatalysatoren und die Funktion eines Separators für die gasförmigen Reaktanden Wasserstoff und Sauerstoff.

Bei einer vorteilhaften Variante einer Ausführungsform umfaßt die Hilfsenergiequelle einen oder mehrere Akkumulatoren. Über eine Akkumulatorladevorrichtung lassen sich diese Akkumulatoren während des Energieabgabebetriebs aufladen. Sie stellen also die Hilfsenergie, d. h. Startenergie, zum Hochfahren des Brennstoffzellensystems bereit. Mit den Akkumulatoren läßt es sich auch erreichen, daß, wenn ein Verbraucher angeschlossen ist, dieser für eine begrenzte Zeitspanne elektrische Energie von dem Brennstoffzellensystem abgreifen kann, auch wenn noch nicht in den Energieabgabebetrieb des oder der Brennstoffzellenblöcke umgeschaltet ist. Der Verbraucher kann dann die Energie dem Akkumulator entnehmen. Dieser Akkumulatorbetrieb erfolgt kurzzeitig, d. h. begrenzt auf die Zeitspanne bis zum Erreichen des Leistungsbetriebs und zeitgesteuert. Ist ein stabiler reproduzierbarer Leerlaufbetriebszustand des Brennstoffzellensystems erreicht, dann liegt der Energieabgabebetriebsmodus vor und die Hilfsenergiequelle kann insoweit abgekoppelt werden, daß sie nicht als Hilfsenergiequelle für das Brennstoffzellensystem arbeitet.

Bei einer Variante einer Ausführungsform ist es vorgesehen, daß die Hilfsenergiequelle extern mit Energie versorgbar ist. Beispielsweise sind dazu entsprechende Anschlußbuchsen vorgesehen, an die eine externe Stromquelle anschließbar ist. Dadurch läßt sich dem Brennstoffzellensystem gewissermaßen eine Art von Starthilfe geben, wenn beispielsweise der Akkumulator entladen ist.

Ganz besonders vorteilhaft ist es, wenn eine Inbetriebnahme/Außerbetriebnahme des Brennstoffzellensystems automatisch durchführbar ist, d. h. der Inbetriebnahmevorgang/Außerbetriebnahmevorgang ohne Überwachung und Eingriff eines Benutzers erfolgt.

Vorteilhafterweise ist dazu ein extern betätigbarer Schalter zur Einleitung der Inbetriebnahme/Aüßerbetriebnahme des Brennstoffzellensystems vorgesehen; dieser Schalter ist beispielsweise manuell betätigbar und/oder über einen Verbraucher betätigbar, d. h. ein Verbraucher kann ein entsprechendes Steuersignal an das Brennstoffzellensystem übermitteln, um dessen Inbetriebnahme/Außerbetriebnahme einzuleiten.

Ganz besonders vorteilhaft ist es, wenn die Inbetriebnahmeparameter/Außerbetriebnahmeparameter des Brennstoffzellensystems fest eingestellt sind. Dadurch läßt sich ohne Zutun eines Bedieners ein Hochfahren/Herunterfahren des Brennstoffzellensystems auf die eingestellten Parameter durchführen, da die entsprechenden Vorgaben für die Einleitung der Inbetriebnahme, Durchführung des Inbetriebnahmevorgangs und Abschluß des Inbetriebnahmevorgangs definiert vorliegen und entsprechend auch die Parameter für den Außerbetriebnahmevorgang definiert vorliegen.

Es kann dabei vorgesehen sein, daß die Vorgaben einstellbar sind. Die Einstellung erfolgt aber nicht während der Inbetriebnahme oder des normalen Betriebs des Brennstoffzellensystems, sondern vor oder während der Erstinbetriebnahme, um die Vorgaben so einstellen zu können, daß das Brennstoffzellensystem optimiert eingestellt ist.

Eine automatische Inbetriebnahme/Außerbetriebnahme läßt sich dann auf besonders einfache Weise durchführen, wenn auch die Betriebsparameter des Brennstoffzellensystems mittels einer Einstellvorrichtung fest eingestellt sind. Auf diese Weise kann ein Zusammenhang zwischen den Inbetriebnahmeparametern/Außerbetriebnahmeparametern und den Betriebsparametern geschaffen werden, so daß der Übergang von der Inbetriebnahme in den Leistungsbetrieb und der Übergang von dem Leistungsbetrieb in die Außerbetriebnahme auf definierte Weise durchführbar ist.

Insbesondere lassen sich dabei Zuführungsparameter von Brennstoff und Oxidator mittels der Einstellvorrichtung fest vorgeben. Durch die geeignete Einstellung der Zuführungsparameter läßt sich eine dynamische Leistungssteuerung erreichen, wobei die Leistungsabgabe verbrauchergeführt ist. Dadurch läßt sich ein einfacher Systemaufbau mit preiswerten Komponenten realisieren, ohne daß aufwendige und Energie konsumierende Regeleinrichtungen vorgesehen werden müssen. Weiterhin kann bei geeigneter Einstellung der Zuführungsparameter von Brennstoff und Oxidator im Zusammenhang mit Polymermembran-Brennstoffzellen auf die Vorschaltung von Befeuchtereinrichtungen verzichtet werden. Dadurch ergibt sich zum einen ein niedriger Energieverbrauch bei dem Betrieb des erfindungsgemäßen Brennstoffzellensystems, und zum anderen läßt sich eine hohe Systemzuverlässigkeit realisieren. Es läßt sich dann mit dem erfindungsgemäßen Brennstoffzellensystem zeitgleich auf die dynamischen und statischen Energieanforderungen des (externen) Verbrauchers mit Energieabgabe reagieren, wobei das Brennstoffzellensystem seinen Eigenenergieverbrauch, d. h. den Energieverbrauch der internen Verbraucher, abdeckt.

Um die Zuführungsparameter des Oxidators einstellen zu können, umfaßt die Einstellvorrichtung einen Verdichterförderer für den Oxidator.

Ganz besonders vorteilhaft ist es, wenn auf der Zuführungsseite der Druck und der Volumenstrom der einem Brennstoffzellenblock insbesondere in gegenseitiger Abhängigkeit zugeführter Luft fest vorgegeben werden. Es muß dann keine Luftmengenregelung durchgeführt werden, so daß das Brennstoffzellensystem einfach aufbaubar ist. Da weiterhin keine entsprechenden Regelventile vorgesehen werden müssen, ist der Eigenenergieverbrauch des Brennstoffzellensystems verringert.

Weiterhin ist es günstig, wenn die Einstellvorrichtung einen Druckminderer für den Brennstoff umfaßt, welcher einem Brennstoffvorrat nachgeschaltet ist. Dadurch läßt sich auf einfache Weise ein bestimmter Druck bei der Brennstoffzuführung zu einem Brennstoffzellenblock einstellen. Insbesondere ist es dabei vorgesehen, daß mittels des Druckminderers ein Druck des einem Brennstoffzellenblock zugeführten Brennstoffs fest einstellbar ist, d. h. vorgebbar ist. Dieser Druck läßt sich dann auf den Druck der zugeführten Luft ausrichten, um so eine optimale Verfahrensführung zu erreichen. Es läßt sich dann insbesondere eine fest Druckdifferenz zwischen Wasserstoffzuführung und Luftzuführung einstellen, wobei die Druckdifferenz im Bereich zwischen 0,1 und 0,3 bar liegen kann, mit dem höheren Druck bei der Luftzuführung.

Es läßt sich dadurch zum einen erreichen, daß die Membrane der Brennstoffzellen nicht austrocknen, da der Druckunterschied eine bestimmte Schwelle überschreitet und zum anderen, daß nicht Wasserdampf aus den Membranen herausgedrückt wird, da der Druckunterschied eine bestimmte Schwelle unterschreitet.

Ganz besonders vorteilhaft ist es, wenn eine kontinuierliche Wasserstoffabführung aus einem Brennstoffzellenblock gesperrt wird. Dadurch läßt sich der Wasserstoffdurchfluß von einem Wasserstoffvorrat zu einem Brennstoffzellenblock direkt über den elektrischen Abgabestrom des Brennstoffzellensystems an einen Verbraucher und an Eigenverbraucher einstellen, d. h. die Leistungsaufnahme dieser externen und internen Verbraucher steuert den Wasserstoffvolumenstrom. Es muß keine Regelungseinrichtung vorgesehen werden, um die Wasserstoffmenge, welche dem Brennstoffzellenblock zugeführt wird, zu steuern. Es ist dazu in einer Abführungsleitung für Brennstoff von einem Brennstoffzellenblock ein Sperrventil angeordnet, um "im wesentlichen" die Wasserstoffabführung zu sperren.

Vorteilhafterweise ist dabei das Sperrventil getaktet schaltbar. Es läßt sich dann die Wasserstoffabführung im wesentlichen sperren, damit sich die dem Brennstoffzellenblock zugeführte Wasserstoffmenge über die Leistungsaufnahme eines Verbrauchers steuern läßt, während ein Wasserstoffüberschuß sich von dem Brennstoffzellenblock abführen läßt. Die Praxis hat dabei gezeigt, daß die Überschußmenge von Wasserstoff bei dem erfindungsgemäßen Brennstoffzellensystem unterhalb von 2 % der verbrauchten Wasserstoffmenge liegt. Es genügt dann, etwa alle 30 bis 60 Sekunden in kurzen Zeitintervallen von beispielsweise ca. 0,5 Sekunden das getaktete Sperrventil zu öffnen, um die Überschußmenge abzuführen. Insbesondere ist ein asymmetrischer Taktgeber zur Taktung des Ventils vorgesehen. Die geringe Überschußmenge an Wasserstoff muß, weil sie eben gering ist, nicht zurückgeführt werden, d. h. es muß kein Wasserstoffkreislauf gebildet werden. Der Überschußwasserstoff, d. h. der abgeführte Wasserstoff, wird dann einem Katalysator und insbesondere einem Rekombinationskatalysator zur Bildung von Wasser zugeführt, bei dem eine Rekombination mit Luftsauerstoff stattfindet. Auf der Wasserstoffseite gibt dann das erfindungsgemäße Brennstoffzellensystem in Zeitintervallen nur Wasser als Emission ab. Eine Mengenregelung des einem Brennstoffzellenblock zugeführten Wasserstoffs erfolgt dadurch über die Leistungsaufnahme des Verbrauchers, so daß keine gesonderte Regelungsvorrichtung vorgesehen werde muß, die zum einen einen Energieverbraucher darstellt und zum anderen sich schlecht an dynamische Leistungsschwankungen des elektrischen Verbrauchers aufgrund einer endlichen Einstellzeit anpassen läßt.

Ein Brennstoffzellensystem läßt sich auf einfache Weise fertigen, wenn ein Brennstoffzellenblock mittels Luft gekühlt wird. Beispielsweise ist dazu ein Brennstoffzellenblock mit Kühlrippen versehen und eine Kühlungsvorrichtung für den oder die Brennstoffzellenblöcke umfaßt einen Lüfter (Ventilator).

Die Kühlungsvorrichtung läßt sich auf einfache Weise ausbilden, wenn ein Temperatursensor an einem Brennstoffzellenblock angeordnet ist und eine vom Temperatursensor ermittelte Temperatur eine Steuergröße für den Lüfter ist. Dadurch läßt sich die Kühlungsvorrichtung von der Steuerung des Brennstoffzellensystems im wesentlichen entkoppeln, da der Temperatursensor die entscheidende Größe für die Temperaturregelung an dem Brennstoffzellenblock bereitstellt. Beispielsweise läßt sich die Kühlung so ausbilden, daß bei Überschreiten einer bestimmten Schwellentemperatur der Lüfter eingeschaltet wird, während unterhalb dieser Schwellentemperatur der Lüfter aus ist. Über den Temperatursensor, der auch als Notschalter ausgebildet sein kann, läßt sich das gesamte Brennstoffzellensystem abschalten, wenn eine bestimmte vorher eingestellte Maximaltemperatur überschritten wird. Eine solche Übertemperatur kann beispielsweise bei Ausfall der Kühlungsvorrichtung auftreten. Es kann auch ein Bimetall-Temperaturschalter vorgesehen sein, welcher in Serie zu einem Hauptschalter angeordnet ist.

Bei einer Variante einer Ausführungsform ist es vorgesehen, daß der Schalter und/oder die Zeitsteuerungsvorrichtung an einen Energiezwischenspeicher gekoppelt ist. Es läßt sich dadurch sicherstellen, daß auch in der kurzen Zeit des Umschaltens, die ja eine Umschaltung zwischen zwei verschiedenen Energieversorgungsquellen darstellt, insbesondere der Schalter mit Energie versorgt ist, so daß dieser seinen Umschaltvorgang korrekt durchführen kann. Insbesondere umfaßt dabei der Energiezwischenspeicher einen Kondensator, wie beispielsweise einen Elektrolytkondensator, als entsprechende Energiequelle.

Vorteilhafterweise ist zwischen dem Schalter für die Umschaltung auf Energieabgabebetrieb und einem Brennstoffzellenblock ein unidirektionales Stromrichtungselement angeordnet. Dadurch lassen sich Rückströme zu einem Brennstoffzellenblock hin verhindern, die diesen beschädigen könnten.

Ganz besonders vorteilhaft ist es, wenn das Brennstoffzellensystem in einem kompakten Behälter und insbesondere geschlossenen Behälter angeordnet

ist, welcher mit elektrischen Anschlüssen für einen externen Verbraucher versehen ist. Dieser Behälter läßt sich transportabel ausbilden, und das Brennstoffzellensystem läßt sich dann beispielsweise als transportable Energieversorgungseinheit verwenden, an die ein Verbraucher angeschlossen werden kann.

Insbesondere ist es dazu vorteilhaft, wenn ein Brennstoffvorrat in dem Behälter angeordnet ist, d. h. in dem Brennstoffvorrat Wasserstofftanks angeordnet sind, so daß ein kompakter Aufbau erreicht ist und keine weiteren Komponenten von außen zugeschaltet werden müssen. Bei dem erfindungsgemäßen Brennstoffzellensystem werden auch interne Energieverbraucher von dem System selber mit elektrischer Energie versorgt, so daß ein kompakter Aufbau erreicht ist. Die entsprechende Energieversorgungseinheit stellt dann ein autonomes System dar.

Der Erfindung liegt ferner die Aufgabe zugrunde, ein Verfahren zur zeitgesteuerten Inbetriebnahme/Außerbetriebnahme eines Brennstoffzellensystems der eingangs genannten Art zu schaffen, welches einfach ausgestaltet ist.

Diese Aufgabe wird bei dem eingangs genannten Verfahren erfindungsgemäß dadurch gelöst, daß nach Einleitung der Inbetriebnahme die Brennstoffzufuhr und die Oxidatorzufuhr geöffnet wird, daß mittels einer Zeitsteuerungseinrichtung nach einer voreingestellten Zeitverzögerung nach Einleitung der Inbetriebnahme eine Umschaltung von Hilfsenergie auf den Energieabgabebetrieb erfolgt und daß die voreingestellte Zeitverzögerung durch Erreichen eines stabilen Arbeitspunkts für die Zuführungsparameter von Brennstoff und/oder Oxidator zu einem Brennstoffzellenblock bestimmt ist.

Die Vorteile eines solchen Verfahrens wurden bereits im Zusammenhang mit dem erfindungsgemäßen Brennstoffzellensystem erläutert.

Weitere vorteilhafte Ausgestaltungsformen wurden bereits im Zusammenhang mit dem erfindungsgemäßen Brennstoffzellensystem erläutert.

Insbesondere ist es vorteilhaft, wenn die Zuschaltung/Wegschaltung von elektrischen Verbrauchern zeitlich gesteuert wird. Beispielsweise ist es zum Start der Inbetriebnahme des Brennstoffzellensystems erforderlich, daß Brennstoff und Oxidator einem Brennstoffzellenblock bereitgestellt werden. Die dazu nötigen elektrischen Verbraucher müssen dann gleich von Anfang an zugeschaltet werden. Eine Kühlvorrichtung für einen Brennstoffzellenblock muß nicht sofort zugeschaltet werden, da ja erst mit zunehmender Zeit eine kalte Verbrennung in dem Brennstoffzellenblock stattfindet. Es kann also Energie gespart werden, wenn eine Kühlungsvorrichtung erst später zugeschaltet wird. Ähnliches gilt für die Außerbetriebnahme des Brennstoffzellensystems, wobei hier die Wasserstoffzuführung und Luftzuführung sofort abgeschaltet werden kann.

Eine Kühlung eines Brennstoffzellenblocks läßt sich auf einfache Weise erreichen, wenn diese temperaturgesteuert wird, so daß sie von der übrigen Regelung der Inbetriebnahme und des Betriebs des Brennstoffzellensystems im wesentlichen entkoppelt ist.

Um ein gezieltes Hochfahren in den Leistungsbetrieb des Brennstoffzellensystems zu erreichen, wird günstigerweise nach Einleitung der Inbetriebnahme, was über einen externen Schalter erfolgt, die Brennstoffzufuhr und die Oxidatorzufuhr zu einem Brennstoffzellenblock geöffnet, damit eben diesem Brennstoff und Oxidator für die kalte Verbrennung zur Verfügung stehen. Es wird dann in einer zweiten Stufe nach einer Zeitverzögerung nach Einleitung der Inbetriebnahme eine Umschaltung von Hilfsenergie auf den Energieabgabebetrieb durchgeführt. In dieser zweiten Stufe werden dann die internen Verbraucher des Brennstoffzellensystems von dem oder den Brennstoffzellenblöcken selber mit Energie versorgt, während die Hilfsenergiequelle bezüglich der Energieversorgung dieser Verbraucher abgekoppelt ist.

Die Zeitverzögerung ist dabei durch das Erreichen eines stabilen Arbeitspunkts für die Zuführungsparameter von Brennstoff und/oder Oxidator zu einem Brennstoffzellenblock bestimmt. Insbesondere benötigt ein Luftförderer eine endliche Anfahrzeit, bis eine voreingestellte definierte Luftmenge in einem bestimmten Druck einem Brennstoffzellenblock bereitgestellt wird.

Eine Kühlungsvorrichtung stellt grundsätzlich einen internen Verbraucher eines Brennstoffzellensystems dar, welcher viel Energie verbraucht. Es ist deshalb günstig, wenn bei Umschaltung auf den Energieabgabebetrieb eine Kühlung für den oder die Brennstoffzellenblöcke eingeschaltet ist, d. h. in der ersten Stufe des Hochfahrens, wenn die Hilfsenergiequelle die Energiequelle für die internen Verbraucher darstellt, die Kühlung noch nicht eingeschaltet ist, sondern erst während der zweiten Stufe, wenn die Brennstoffzellenblöcke Energie abgeben.

Ferner ist es günstig, wenn nach oder bei Umschaltung auf den Energieabgabebetrieb eine Strommessung des Abgabestroms des Brennstoffzellensystems und/oder eine Spannungsmessung eingeschaltet wird. Die notwendige Energie zum Betrieb der entsprechenden Meßgeräte wird dann von dem oder den Brennstoffzellenblöcken geliefert.

Die nachfolgende Beschreibung bevorzugter Ausführungsformen dient im Zusammenhang mit der Zeichnung der näheren Erläuterung der Erfindung. Es zeigen:
- Figur 1: ein schematisches Blockschaltbild einer Ausführungsform eines erfindungsgemäßen Brennstoffzellensystems;
- Figur 2: die Komponenten eines erfindungsgemäßen Brennstoffzellensystems gemäß dem Blockschaltbild von Figur 1;
- Figur 3: eine vergrößerte Darstellung eines Teilausschnitts des Brennstoffzellensystems gemäß Figur 2, wobei eine Steuerungsvorrichtung in größerem Detail dargestellt ist;
- Figur 4: eine Variante einer Steuerungsvorrichtung zur Steuerung der Inbetriebnahme, des Betriebs und der Außerbetriebnahme des Brennstoffzellensystems gemäß Figur 2 und
- Figur 5: eine schematische Ansicht eines kompakten Behälters, in dem das erfindungsgemäße Brennstoffzellensystem angeordnet ist.

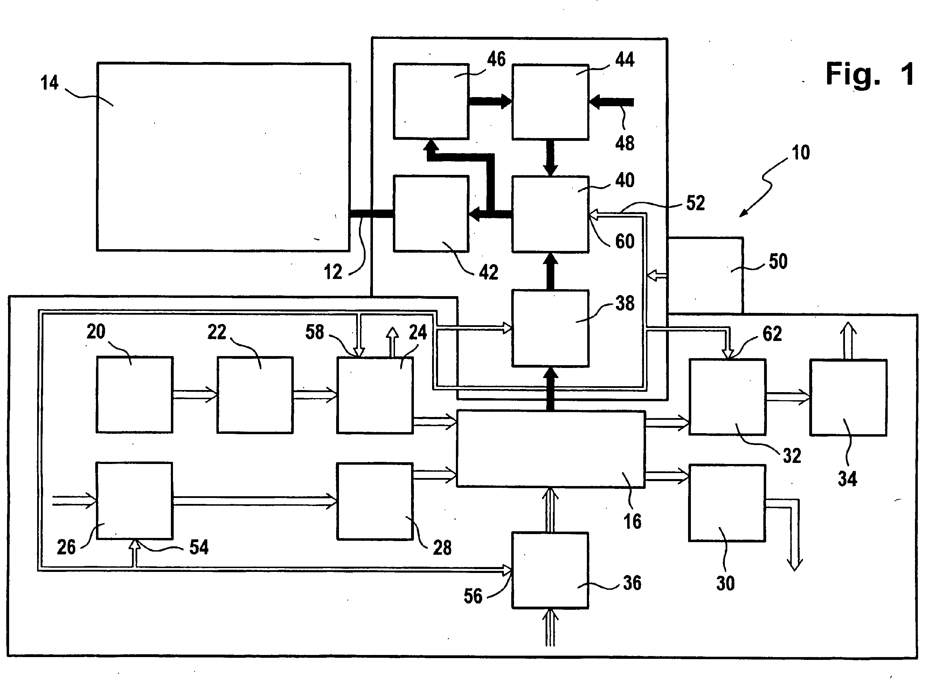

Durch ein Brennstoffzellensystem, welches in Figur 1 als Ganzes mit 10 bezeichnet ist, ist an Anschlüssen 12 einem Verbraucher 14 elektrische Energie bereitstellbar.

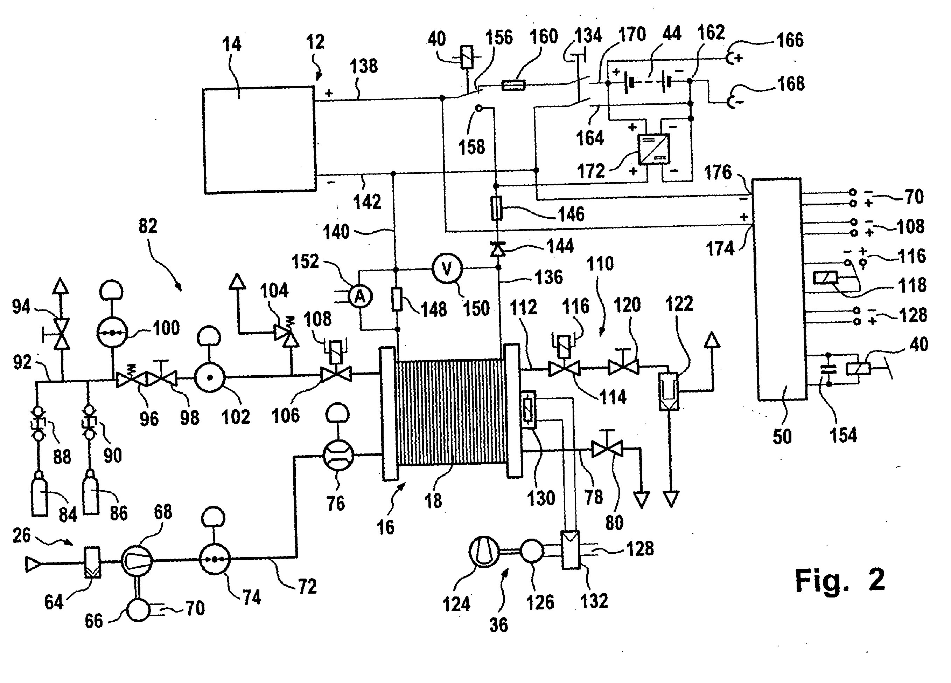

Das Brennstoffzellensystem 10 umfaßt einen Brennstoffzellenblock 16 mit Brennstoffzellen 18 (Figur 2), die stapelartig zu dem Brennstoffzellenblock 16 (Brennstoffzellenstack) verbunden sind. In dem Brennstoffzellenblock 16 wird chemische Energie durch die kalte Verbrennung eines Brennstoffs mit einem Oxidator in elektrische Energie umgewandelt und an dem Anschluß 12 dem Verbraucher 14 bereitgestellt.

Bei den Brennstoffzellen 18 handelt es sich insbesondere um Polymermembran-Brennstoffzellen (PEFC), bei denen der Elektrolyt durch eine protonenleitende Folie gebildet ist, die neben der Funktion des Elektrolyten auch Katalysatorträger für die anodischen und kathodischen Elektrokatalysatoren ist und Separator für die gasförmigen Reaktanten. Als Brennstoff wird dabei Wasserstoff eingesetzt und als Oxidator Sauerstoff und insbesondere Luftsauerstoff.

Dazu ist ein Wasserstoffspeicher 20 für einen Wasserstoffvorrat vorgesehen, wobei der Wasserstoff über einen Druckminderer 22 und über eine Ventilvorrichtung 24 dem Brennstoffzellenblock 16 zuführbar ist.

Der Luftsauerstoff als Oxidator wird über eine Luftversorgungsvorrichtung 26 dem Brennstoffzellenblock 16 zugeführt. Eine Volumenstrommeßvorrichtung 28 ermittelt die zugeführte Luftmenge.

Über eine Ventilvorrichtung 30 auf der Abführungsseite des Brennstoffzellenblocks 16 läßt sich der Druck der zugeführten Luft einstellen. Die Doppelpfeile in Figur 1 zeigen dabei die Strömungsrichtung der Luft an.

Auf der Wasserstoffabführungsseite ist ein Sperrventil 32 angeordnet, welches getaktet steuerbar ist, so daß die Sperrwirkung getaktet aufhebbar ist.

Dem Sperrventil 32 nachgeschaltet ist ein Rekombinationskatalysator 34, an welchem durch das Sperrventil 32 durchgelassener Wasserstoff mit Luftsauerstoff zu Wasser oxidiert. Die Doppelpfeile ausgehend von dem Wasserstoffspeicher 20 deuten dabei die Strömungsrichtung des Wasserstoffs an.

Der Brennstoffzellenblock 16 wird mittels einer Kühlungsvorrichtung 36 gekühlt, wobei insbesondere der Brennstoffzellenblock 16 luftgekühlt ist. Die Dreifachpfeile in Figur 1 deuten dabei die Strömungsrichtung der zur Kühlung zugeführten Luft an.

Mit dem Brennstoffzellenblock 16 ist eine Meßvorrichtung 38 verbunden, welche eine Spannungsmessung und Strommessung durchführt. Dieser Meßvorrichtung 38 nachgeschaltet ist ein Leistungsschalter 40, mit dem sich auf eine Energieabgabe des Brennstoffzellenblocks 16 an den Verbraucher 14 schalten läßt. Dem Leistungsschalter 40 ist ein Energieverteiler 42 nachgeordnet. Über diesen Energieverteiler läßt sich auch die Luftversorgungsvorrichtung 26 und die Kühlungsvorrichtung 36 als interne Energieverbraucher des Brennstoffzellensystems 10 versorgen.

Der Leistungsschalter 40 ist einem Akkumulator 44 als Hilfsenergiequelle nachgeschaltet, welcher steuert, ob der Energieverteiler 42 mit der elektrischen Energie von dem Brennstoffzellenblock 16 oder dem Akkumulator 44 versorgt wird. Für den Akkumulator 44 ist dabei eine Akkumulatorladevorrichtung 46 vorgesehen, welche wiederum bei einem Energieabgabebetrieb des Brennstoffzellenblocks 16 (der Leistungsschalter 40 ist so gestellt, daß der Verbraucher 14 von dem Brennstoffzellenblock 16 mit elektrischer Energie versorgt ist) aufladbar ist. Es kann auch vorgesehen sein, daß der Akkumulator 44 von außen aufladbar ist. Dies ist durch den Pfeil mit Bezugszeichen 48 angedeutet.

Durch eine Steuerungsvorrichtung 50 ist der Betrieb und insbesondere die Inbetriebnahme und Außerbetriebnahme des Brennstoffzellensystems 10 steuerbar. Dies ist in der Figur 1 mittels einer Steuerleitung 52 angedeutet. Über die Steuervorrichtung 50 läßt sich insbesondere die Inbetriebnahme und Außerbetriebnahme der Luftversorgungsvorrichtung 26 steuern; dies ist angedeutet mit dem Bezugszeichen 54. Weiterhin läßt sich die Inbetriebnahme der Kühlungsvorrichtung 36 steuern; dies ist mit dem Bezugszeichen 56 angedeutet.

Durch die Steuerungsvorrichtung 50 läßt sich weiterhin ein Sperrventil 58 der Ventilvorrichtung 24 öffnen bzw. schließen, um so die Wasserstoffzufuhr zum Brennstoffzellenblock 16 zu öffnen bzw. zu sperren; dies ist mit dem Bezugszeichen 58 angedeutet.

Weiterhin läßt sich mit der Steuerungsvorrichtung 50 der Leistungsschalter 40 steuern, d. h. insbesondere ob in den Energieabgabebetrieb an den Verbraucher 14 geschaltet wird oder die Energieverbraucher des Brennstoffzellensystems 10 (beispielsweise Luftversorgungsvorrichtung 26, Kühlungsvorrichtung 36, Steuerungsvorrichtung 50, Ventilvorrichtung 24) mit der Hilfsenergie des Akkumulators 44 versorgt werden müssen; diese Steuerung ist durch das Bezugszeichen 60 angedeutet.

Weiterhin bewirkt die Steuerungsvorrichtung 50 das getaktete Öffnen des Sperrventils 32; dies ist durch das Bezugszeichen 62 angedeutet.

Im folgenden wird der Aufbau des Brennstoffzellensystems 10 anhand eines Ausführungsbeispiels näher erläutert sowie seine Funktionsweise näher erläutert.

Die Luftversorgungsvorrichtung 26 umfaßt, wie in Figur 2 gezeigt, einen Luftfilter 64, dem ein mittels eines Elektromotors 66 betriebener Luftförderer 68 (Verdichtungsförderer) nachgeschaltet ist. Der Elektromotor 66 ist dabei über Anschlüsse 70 mit elektrischer Energie versorgt, wobei die Schaltung dieser Anschlüsse 70 über die Steuerungsvorrichtung 50 erfolgt, und zwar in einer derartigen Weise, daß der Elektromotor an ist oder aus ist. Mittels des Luftförderers 68 läßt sich ein bestimmter Volumenstrom der Luft vorgeben, welche mit Luftsauerstoff als Oxidator dem Brennstoffzellenblock 16 zugeführt wird.

In einer Zuführungsleitung 72 für Luft zum Brennstoffzellenblock 16 ist ein Drucksensor 74 angeordnet, mittels dem sich der Druck der zugeführten Luft ermitteln läßt. Ferner ist in der Zuführungsleitung 72 ein Volumenstrommeßsensor 76 zur Bestimmung des zugeführten Luft-Volumenstroms zum Brennstoffzellenblock 16 angeordnet. An einer Abführungsleitung 78 für Luft von dem Brennstoffzellenblock 16, welche in korrespondierender Verbindung mit der Zuführungsleitung 72 steht, ist ein Einstellventil 80 angeordnet, welches beispielsweise handbetätigbar ist und mit dem sich der Druck in der Zuführungsleitung 72 und der Abführungsleitung 78 einstellen läßt, so daß Volumenstrom und Druck der Luftzuführung über den Luftförderer 68 (Luftkompressor) und das Einstellventil 80 in direkter Abhängigkeit einstellbar sind und insbesondere fest vorgebbar sind.

Auf einer Wasserstoffzuführungsseite 82 ist als Wasserstoffvorrat 20 ein erster Wasserstoffspeicher 84 und ein zweiter Wasserstoffspeicher 86 angeordnet. Diese sind jeweils über Schnellkupplungen 88, 90 an eine Wasserstoffzuführungsleitung 92 gekoppelt. Diese wiederum ist mit einem Entspannungsventil 94 verbunden, welches insbesondere handbetätigbar ist, so daß Wasserstoff von dem Brennstoffzellensystem abführbar ist. Im normalen Betriebsmodus ist das Entspannungsventil 94 geschlossen.

In der Wasserstoffzuführungsleitung 92 ist ein Druckminderer 96 angeordnet, welcher insbesondere mit einem Sperrventil 98 versehen ist, das beispielsweise handbetätigbar ist. Der Druckminderer weist einen Drucksensor 100 auf, mittels dem der Druck vor Druckminderung ermittelbar und anzeigbar ist.

Der Druckminderer reduziert dabei den Druck des Wasserstoffs in der Zuführungsleitung 92 auf einen fest einstellbaren Wert, d. h. nach dem Druckminderer 96 weist der Wasserstoff in der Wasserstoffzuführungsleitung 92 einen bestimmten, fest eingestellten Druck auf. Dieser Druck läßt sich über einen Drucksensor 102 ermitteln und gegebenenfalls anzeigen, so daß er kontrolliert werden kann.

Dem Drucksensor 102 nachfolgend ist in der Wasserstoffzuführungsleitung 92 ein Sicherheitsventil 104 angeordnet, über welches sich Wasserstoff aus dem Brennstoffzellensystem 10 entfernen läßt, wenn beispielsweise ein Druckanstieg eintritt.

In der Wasserstoffzuführungsleitung 92 ist vor dem Brennstoffzellenblock 16 ein insbesondere elektromagnetisch betätigbares Sperrventil 106 angeordnet. Das Sicherheitsventil 104 und das Sperrventil 106 bilden dabei die Ventilvorrichtung 24. Steueranschlüsse 108 des Sperrventils 106 sind mit der Steuerungsvorrichtung 50 verbunden, so daß darüber die Zuführung von Wasserstoff zu dem Brennstoffzellensystem sperrbar ist bzw. freigebbar ist. Das Sperrventil 106 wird dabei so gesteuert, daß es entweder offen oder geschlossen ist.

Auf einer Abführungsseite 110 für Wasserstoff von dem Brennstoffzellenblock 16 ist in einer Abführungsleitung 112 ein Sperrventil 114 angeordnet, welches elektromagnetisch betätigbar ist, wobei entsprechende Anschlüsse 116 mit der Steuerungsvorrichtung 50 verbunden sind. Zwischen den Anschlüssen 116 und der Steuerungsvorrichtung 50 ist ein asymmetrischer Taktgeber 118 geschaltet, über welchen das Sperrventil 114 unabhängig getaktet steuerbar ist und insbesondere dieses getaktet geöffnet werden kann, um für eine Wasserstoffentspannung von dem Brennstoffzellenblock 16 her zu sorgen.

Dem Sperrventil 114 ist in der Abführungsleitung 112 nachgeschaltet ein Einstellventil 120 angeordnet, welches insbesondere handbetätigbar ist. Mittels dieses Einstellventils 120 läßt sich der Entspannungsdruck einstellen.

Auf das Einstellventil 120 folgt in der Wasserstoffabführungsleitung 112 ein Rekombinationsvorrichtung 122, an welcher Wasserstoff mit Luftsauerstoff katalytisch zu Wasser umgesetzt wird. Beispielsweise ist dazu ein Katalysatorgewebe aus Platin-Rodium vorgesehen.

Die einzige Emission des Brennstoffzellensystems 10 ist damit Wasser in flüssiger Form und/oder in Dampfform.

Die Kühlungsvorrichtung 36 umfaßt einen Lüfter 124, welcher durch einen Motor 126 angetrieben ist. Dieser Motor wiederum wird über Anschlüsse 128 mit Energie versorgt, wobei diese Anschlüsse 128 durch die Steuerungsvorrichtung 50 bezüglich der Bereitstellung von elektrischer Energie steuerbar sind.

Die Temperatur des Brennstoffzellenblocks 16 wird über einen oder mehrere Temperatursensoren 130 ermittelt, und über einen Thermoschalter 132 wird dann der Lüfter 124 gesteuert. Die Steuerung der Steuerungsvorrichtung 50 über die Anschlüsse 128 ist im wesentlichen nur eine Steuerung bezüglich der Energieversorgung zum Einschalten oder Ausschalten des Lüfters 124. Es braucht nicht vorgesehen sein, daß der Lüfter 124 an das Brennstoffzellensystem 10 rückgekoppelt ist, d. h. das Steuersignal zum Betrieb des Lüfters 124 stammt von dem Temperatursensor 130 (Zweipunktregelung).

Insbesondere ist es dabei vorgesehen, daß, wenn eine Übertemperatur an dem Brennstoffzellenblock 16 ermittelt wird, ein Temperaturschalter, beispielsweise ein Bimetallschalter, welcher in Serie zu einem Hauptschalter 134 geschaltet ist, das Brennstoffzellensystem 10 abschaltet, d. h. die Zuführung von Wasserstoff und Luft zu dem Brennstoffzellenblock 16 unterbindet.

Die Temperaturregelung des Brennstoffzellenblocks 16 über den Lüfter 124 ist dann über eine beispielsweise Zweipunktregelung unabhängig von der Von dem Brennstoffzellenblock 16 führt eine Pluspotentialleitung 136 zu einem entsprechenden Plus-Anschluß 138 und eine entsprechende Minuspotentialleitung 140 zu einem Minus-Anschluß 142, wobei diese Anschlüsse den externen Anschluß 12 bilden. In der Pluspotentialleitung 136 ist dabei eine Diode 144 zur Sperrung von Rückströmen und eine Sicherung 146 angeordnet. Über einen Shunt-Widerstand beispielsweise in der Minuspotentialleitung 140 läßt sich mit Hilfe eines Voltmeters 150 und eines Amperemeters 152 die an dem Brennstoffzellenblock 16 anliegende Spannung und der vom Brennstoffzellenblock 16 abgegebene Strom messen.

Die Stromversorgung für das Amperemeter 152 läßt sich von der Steuerungsvorrichtung 50 beispielsweise über die Anschlüsse 128 bereitstellen.

Es ist vorgesehen, daß ein Miniaturverbraucher zwischen der Pluspotentialleitung 136 und der Minuspotentialleitung 140 angeordnet ist, um bei Stillstand des Brennstoffzellenblocks 16 eine Umpolung der Brennstoffzellen 18 zu verhindern.

Über den Leistungsschalter 40 läßt sich die Pluspotentialleitung 136 auf den Plusanschluß 138 schalten, bzw. diese Verbindung läßt sich wegschalten. Der Leistungsschalter 40 wiederum ist mit der Steuerungsvorrichtung 50 verbunden. Parallel zu dem Leistungsschalter 40 ist ein Kondensator 154, beispielsweise ein Elektrolytkondensator, geschaltet. Dieser Kondensator dient dazu, während des Schaltvorgangs des Leistungsschalters 40, bei dem eine Umstellung der Energieversorgung der Verbraucher des Brennstoffzellensystems 10 von dem Akkumulator 44 auf den Brennstoffzellenblock 16 selber erfolgt, dessen Energieversorgung sicherzustellen, d. h. der Kondensator 154 stellt einen Energiezwischenspeicher für den Leistungsschalter 40 dar.

Der Leistungsschalter 40 weist damit eine erste Schaltstellung 156 auf, bei der die Verbindung zwischen der Pluspotentialleitung 136 und dem Plusanschluß 138 unterbrochen ist und weist eine zweite Schaltstellung 158 auf, bei welcher diese Verbindung hergestellt ist.

In der ersten Schaltstellung 156 ist der Plusanschluß 138 über eine Sicherung 160 mit einem entsprechenden Plusanschluß des Akkumulators 44 verbunden, wobei der Akkumulator mehrere Akkumulatorblöcke umfassen kann.

Der Hauptschalter 134 ist dabei so angeordnet und ausgebildet, daß bei geöffnetem Hauptschalter (Nichtbetrieb des Brennstoffzellensystems 10) auch in der ersten Schaltstellung 156 des Leistungsschalters 40 die Verbindung zwischen dem Plusanschluß 138 und dem Akkumulator 44 unterbrochen ist.

Ein Minusanschluß 162 des Akkumulators 44 ist über eine Verbindungsleitung 164 mit dem Minusanschluß 142 verbunden.

Es können auch Ladebuchsen 166, 168 vorgesehen sein, welche mit einem Plusanschluß 170 bzw. einem Minusanschluß 162 des Akkumulators 44 verbunden sind, so daß dieser von außen aufgeladen werden kann.

Weiterhin ist eine Akkumulatorladevorrichtung 172 vorgesehen, welche mit dem Plusanschluß 170 und dem Minusanschluß 162 des Akkumulators ständig verbunden ist. Über diese Akkumulatorvorrichtung 172 läßt sich der Akkumulator 44 als Hilfsenergiequelle während des "normalen Betriebs" des Brennstoffzellensystems 10 aufladen, d. h. wenn das Brennstoffzellensystem 10 elektrische Energie abgibt. Insbesondere ist die Akkumulatorladevorrichtung 172 so eingestellt, daß der Akkumulator nur dann geladen wird, wenn die Spannung des Verbrauchers 14 unterhalb eines bestimmten Werts liegt, so daß die Akkumulatorladung den Betrieb des Verbrauchers 14 nicht einschränkt.

Ein Plusanschluß 174 der Steuerungsvorrichtung 50 ist mit dem Plusanschluß 138 verbunden. Ferner ist ein Minusanschluß 176 der Steuerungsvorrichtung 50 mit dem Minusanschluß 142 verbunden. Dadurch ist sichergestellt, daß die Steuerungsvorrichtung 50 unabhängig von der Schalterstellung 156 bzw. 158 des Leistungsschalters 40 mit elektrischer Energie versorgt wird, so daß unabhängig davon, ob die Energie von dem Akkumulator 44 stammt oder von dem Brennstoffzellenblock 16, über die Steuerungsvorrichtung 50 der Elektromotor 66, der Motor 126 und das Sperrventil 106 über die Steuerungsvorrichtung 50 versorgbar sind.

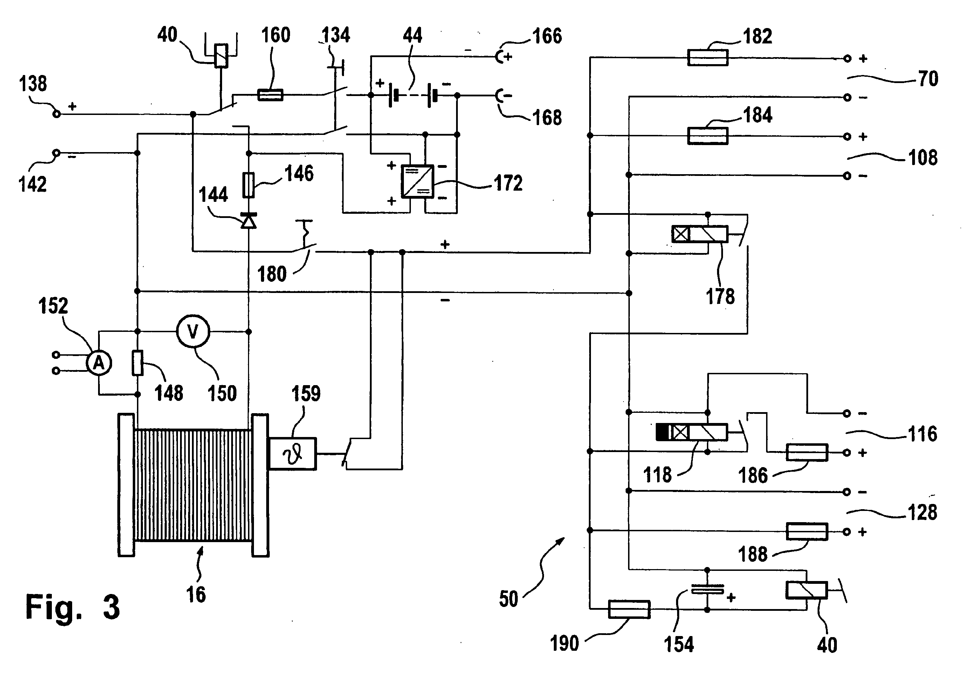

Wie in Figur 3 näher gezeigt ist, umfaßt die Steuerungsvorrichtung 50 eine Zeitsteuerungsvorrichtung 178, welche insbesondere durch ein Zeitrelais mit Einschaltverzögerung gebildet ist. Dadurch läßt sich eine Anzugverzögerung beispielsweise in der Größenordnung von 10 bis 15 Sekunden erreichen, wenn nach Einleitung der Inbetriebnahme des Brennstoffzellensystems 10 von der Energieversorgung mittels des Akkumulators 44 eine Umschaltung auf eine Energieversorgung mittels des Brennstoffzellenblocks 16 erfolgen soll, wobei diese Umschaltung, ausgelöst von der Zeitsteuerungsvorrichtung 178, durch den Leistungsschalter 40 bewirkt wird.

Diese Zeitsteuerungsvorrichtung 178 wirkt dabei auf die Anschlüsse 116, über welche das getaktete Sperrventil 114 steuerbar ist, auf die Anschlüsse 128, mittels welcher die Kühlung des Brennstoffzellenblocks 16 steuerbar ist (ein/aus) und auf den Leistungsschalter 40. Dies bedeutet, daß die Anzugverzögerung auf diese Komponenten wirkt, während sie nicht auf die Luftzuführung (Motor 66) und die Wasserstoffzuführung (Absperrventil 106) wirkt. Mit Einleitung der Inbetriebnahme wird also sofort die Wasserstoffzuführung und die Luftzuführung zum Brennstoffzellenblock 16 freigegeben, während das Anschalten der Kühlungsvorrichtung 36, die getaktete Freigabe des Sperrventils 114 und die Umschaltung des Leistungsschalters 40 von der ersten Schaltstellung 156 auf die zweite Schaltstellung 158 mit dieser Anzugverzögerung erfolgt. Diese ist fest eingestellt und insbesondere dadurch bestimmt, welche Zeit benötigt wird, um bei der Luftzuführung den fest vorgegebenen Volumenstrom und den fest vorgegebenen Druck zu erreichen.

Über einen Schalter 180 läßt sich die Verbindung zwischen dem Plus-Anschluß 138 und der Steuerungsvorrichtung 50 unterbrechen. Dieser Schalter 180 ist insbesondere an den Hauptschalter 134 gekoppelt, so daß die Energieversorgung der Steuerungsvorrichtung 50 durch den Hauptschalter 134 ein- und ausschaltbar ist.

In Figur 3 ist ebenfalls ein Thermoschalter 159, beispielsweise ein Bimetallschalter, gezeigt, welcher bei Überschreiten einer bestimmten Temperatur die Versorgung mit elektrischer Energie der Steuerungsvorrichtung 50 derart unterbricht, daß die Luftzuführung, die Wasserstoffzuführung zu dem Brennstoffzellenblock 16 und die Energieversorgung der Steuerungsvorrichtung 50 gesperrt wird.

Weiterhin ist die Steuerungsvorrichtung 50 noch mit einer Mehrzahl von Sicherungen versehen; insbesondere ist für die Anschlüsse 70 eine Sicherung 182, für die Anschlüsse 108 eine Sicherung 184, für die Anschlüsse 116 eine Sicherung 186, für die Anschlüsse 128 eine Sicherung 188 und für den Leistungsschalter 40 eine Sicherung 190 vorgesehen.

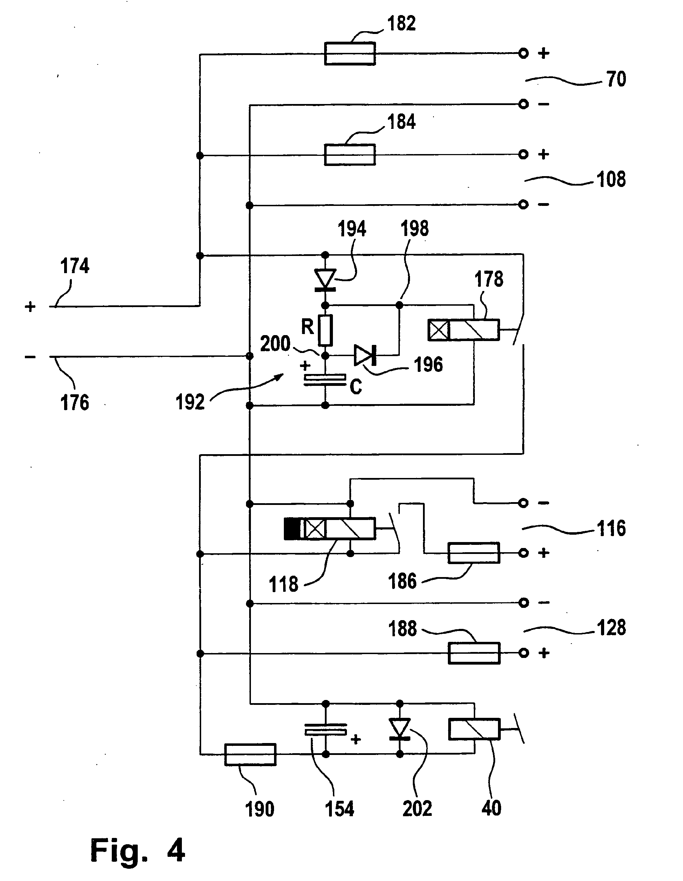

Bei einer Variante einer Ausführungsform, welche in Figur 4 gezeigt ist, ist die Schaltung der Zeitsteuerungsvorrichtung 178 modifiziert. Ansonsten gleiche Komponenten werden mit den gleichen Bezugszeichen wie in Figur 3 versehen.

Der Zeitsteuerungsvorrichtung 178, beispielsweise einem Zeitrelais, ist ein RC-Glied 192 mit einem Widerstand R und einem Kondensator C vorgeschaltet. Der Widerstand R und der Kondensator C liegen dabei in Reihe. Der Widerstand R ist über eine Diode 194, beispielsweise einer Blockdiode, mit dem Plusanschluß 174 verbunden. Weiterhin ist eine Diode 196, beispielsweise eine Blockdiode, so angeordnet, daß sie zwischen einen relaisseitigen Potentialpunkt 198 der Diode 194 und einen Wirkpunkt 200 zwischen dem Widerstand R und dem Kondensator C geschaltet ist.

Diese Beschaltung hat sich in der Praxis als vorteilhaft erwiesen, da für die Energieversorgung der Zeitsteuerungsvorrichtung 178 (des Zeitrelais) auch dann auf stabile Weise gesorgt ist, wenn der asymmetrische Taktgeber 118 und der Leistungsschalter 40 zugeschaltet wird, selbst wenn sich die Anzugszeiten der entsprechenden Relais 178, 118 und 40 geringfügig unterscheiden und der Einschaltstrom dieser Relais für ein kurzzeitiges Absinken der Versorgungsspannung unterhalb der Haltespannung der jeweiligen Relaisspulen sorgt.

Ferner hat es sich noch vorteilhaft erwiesen, dem Kondensator 154 eine Diode 202 parallelzuschalten, um Rückströme und dergleichen von dem Leistungsschalter 40 abzufangen.

Das erfindungsgemäße Brennstoffzellensystem 10 funktioniert wie folgt:
Es ist zu unterscheiden zwischen der Inbetriebnahme/Außerbetriebnahme des Brennstoffzellensystems 10 und dem "normalen Betrieb", d. h. dem Energieabgabebetrieb, bei dem der Brennstoffzellenblock 16 elektrische Energie an den Verbraucher 14 (und an interne Verbraucher) abgibt.

Die Inbetriebnahme erfolgt wie folgt:
Durch Betätigung des Hauptschalters 134 wird über die Steuerungsvorrichtung 50 und den Anschluß 70 der Motor 66 für den Luftförderer 68 angeschaltet, so daß dem Brennstoffzellenblock 16 Luft zugeführt wird. Dabei wurde vorher, wie untenstehend noch näher beschrieben, ein bestimmter Volumenstrom als Arbeitspunkt eingestellt und ebenso ein bestimmter Druck der Luftzuführung. Die Erreichung dieses Arbeitspunkts weist dabei eine Verzögerung auf, da der Anlauf des Luftförderers 68 (Luftkompressor) eine Verzögerung aufweist. Diese Verzögerung liegt beispielsweise in der Größenordnung von 5 bis 10 Sekunden.

Ferner wird mit Betätigung des Hauptschalters 134, d. h. mit Einleitung der Inbetriebnahme des Brennstoffzellensystems 10, über die Anschlüsse 108 das Sperrventil 106 geöffnet, so daß dem Brennstoffzellenblock 16 ebenfalls Wasserstoff als Brennstoff bereitgestellt wird. Der Druck der Wasserstoffzuführung ist dabei mittels des Druckminderers 96 voreingestellt und insbesondere fest eingestellt. Die Verzögerung des Erreichens dieses Arbeitspunkts der Wasserstoffzuführung zum Brennstoffzellenblock 16 ist dabei gegenüber der entsprechenden Verzögerung bei der Luftzuführung vernachlässigbar.

Während der anfänglichen Freigabe der Brennstoffzuführung und Oxidatorzuführung zum Brennstoffzellenblock 16 sind die Anschlüsse 116, 128 und der Leistungsschalter 40 noch nicht freigeschaltet; der Leistungsschalter 40 befindet sich dann in seiner ersten Schaltstellung 156 und die elektrische Energie für die Zuführung von Wasserstoff und Luft zu dem Brennstoffzellenblock 16 stammt von dem Akkumulator 44.

Der Akkumulator 44 versorgt in dieser Schalterstellung den Verbraucher 14 mit elektrischer Energie. Es kann alternativ auch ein interner Schalter vorgesehen sein, der den Akkumulator in diesem Zustand von dem Verbraucher 14 abkoppelt.

Mit einer bestimmten, voreingestellten Zeitverzögerung, welche sich nach der Einstellzeit für die Arbeitspunktparameter der Luftzuführung richtet und beispielsweise bei 15 bis 20 Sekunden liegen kann, schaltet die Zeitsteuerungsvorrichtung 178 dann den Leistungsschalter 40, so daß er von seiner ersten Schaltstellung 156 auf seine zweite Schaltstellung 158 übergeht.

Weiterhin werden dann die Anschlüsse 116 und 128 beschaltet, d. h. die Taktung des Absperrventils 106 wird in Gang gesetzt, so daß überschüssiger Wasserstoff zur Wasserbildung aus dem Brennstoffzellenblock 16 abführbar ist und weiterhin die Kühlungsvorrichtung 36 für den Brennstoffzellenblock 16 in Gang gesetzt wird, indem der Motor 126 mit Energie versorgt werden kann. In diesem Stadium (zweite Stufe des Inbetriebnahmevorgangs) liefert dann der Brennstoffzellenblock 16 aufgrund der Umschaltung des Leistungsschalters 40 in die zweite Schaltstellung 158 die notwendige Energie für die Wasserstoffzuführung, Luftzuführung und für die Betätigung der Kühlung.

Während des "normalen Betriebs" (Energieabgabebetrieb) des Brennstoffzellenblocks 16 wird der Akkumulator 44 über die Akkumulatorladevorrichtung 172 aufgeladen, so daß er beim nächsten Inbetriebnahmevorgang wieder bereitsteht.

Der Akkumulator 44 liefert also die Hilfsenergie zur Inbetriebnahme des Brennstoffzellensystems 10, d. h. zum Starten desselben und zum Übergang in den Energieabgabebetrieb.

Da zum einen in der Wasserstoffzuführung und Luftzuführung ein Arbeitspunkt vorgegeben ist, d. h. während des Inbetriebnahmevorgangs voreingestellte Werte erreicht werden und zum anderen die Zeitverzögerung für die Umschaltung des Leistungsschalters 40 vorgegeben ist, läßt sich die Inbetrieberfolgt eine "Ein-Knopf-Inbetriebnahme" durch Betätigung des extern betätigbaren Hauptschalters 134, ohne daß ein Benutzer nachfolgend von außen eingreifen muß.

Auf die gleiche Weise wird die Außerbetriebnahme des Brennstoffzellensystems 10 eingeleitet, nämlich daß der Hauptschalter 134 in die Aus-Stellung gebracht wird. Dadurch wird die Stromversorgung der Luftzuführung, die Wasserstoffzuführung über das Sperrventil 106 gesperrt und der Leistungsschalter 40 in die Stellung 156 gebracht, d. h. der Brennstoffzellenblock 16 gibt keine Energie mehr ab und wird automatisch zurückgefahren. In diesem Falle der Außerbetriebnahme ist keine Zeitverzögerung durch die Zeitsteuerungsvorrichtung 178 notwendig, da der "Arbeitspunkt" für den Nichtbetrieb sofort durch Stopp der Brennstoffzuführung und Oxidatorzuführung erreicht ist.

Der "normale Betrieb", d. h. der Leistungsbetrieb oder Energieabgabebetrieb des erfindungsgemäßen Brennstoffzellensystems 10 funktioniert wie folgt:
Auf der Zuführungsseite zu dem Brennstoffzellenblock 16 sind bestimmte Arbeitspunkte der Luftzuführung und Wasserstoffzuführung eingestellt. Diese Arbeitspunkt können variabel in dem Sinne sein, daß sie für ein bestimmtes System vorab eingestellt werden, um das System zu optimieren. Sie werden aber im Betrieb nicht verändert, d. h. sie behalten ihre Festeinstellung.

Fest eingestellt wird als Zuführungsparameter der Volumenstrom der Luft, in welchem diese dem Brennstoffzellenblock 16 zugeführt wird. Die Einstellung erfolgt dabei über die Einstellung der Leistung des Luftförderers 68. Ferner wird über das Einstellventil 80 der Druck der Luftzuführung zu dem Brennstoffzellenblock 16 fest eingestellt. Insbesondere erfolgt keine Luftmengenregelung beispielsweise über die Verwendung von Regelventilen und unter dem Einsatz elektronischer Regeleinrichtungen. Der Druck zum Durchtreiben der Luft durch den Brennstoffzellenblock 16 wird insbesondere in der Größenordnung von 1,2 bis 1,5 bar eingestellt. Es wird weiterhin dafür gesorgt, daß Luft im Überschuß vorliegt, d. h. daß beispielsweise die doppelte Menge an Luft bereitgestellt wird, die maximal für die katalytische Verbrennung benötigt wird. Es kann auch mit Drücken von bis zu 3 bar gefahren werden.

Der Druck der Wasserstoffzuführung wird um 0,1 bar bis 0,3 bar geringer eingestellt, um einerseits einer Austrocknung der Membrane der Brennstoffzellen 18 zu verhindern und um zum anderen eine Wasserdampfabführung aus den Membranen zu vermeiden.

Der Wasserstoffdurchfluß durch die Wasserstoffzuführungsleitung 92 wird dabei dynamisch über die Energieaufnahme des Verbrauchers 14 eingestellt, ohne daß dieser von dem Brennstoffzellensystem selber geregelt werden muß. Um eine geringe Überschußmenge an Wasserstoff abzuführen, wird das Sperrventil 116, gesteuert über den asymmetrischen Taktgeber 118, periodisch geöffnet, beispielsweise alle 30 bis 60 Sekunden in Zeitintervallen von ca. 0,5 Sekunden. Versuche haben ergeben, daß die Überschußmenge an Wasserstoff im Bereich von weniger als 2 % der durch die katalytische Verbrennung im Brennstoffzellenblock 16 verbrauchten Wasserstoffmenge liegt.

Durch die feste Arbeitspunkteinstellung auf der Zuführungsseite und insbesondere der Vorgabe der Druckdifferenz zwischen Luft und Wasserstoff läßt sich erreichen, daß die Membrane der Brennstoffzellen 18 nicht austrocknen, so daß keine Befeuchtereinrichtung vorgesehen werden muß.

Die Abführung von thermischer Verlustleistung aus dem Brennstoffzellenblock 16 erfolgt mittels der Kühlungsvorrichtung 36, wobei der Brennstoffzellenblock 16 mit Kühlrippen versehen ist. Insbesondere ist es vorgesehen, daß für die Kühlungsvorrichtung nur zwei fest eingestellte Schalttemperaturen vorgesehen sind, nämlich "hohe Temperatur" bedeutet ein Einschalten des Lüfters 124 und "Temperatur niedrig" bedeutet ein entsprechendes Abschalten. Diese Temperaturen lassen sich mit dem Temperatursensor 130 ermitteln.

Für ein erfindungsgemäßes Brennstoffzellensystem 10, welches eine Leistung von 150 W abgeben kann, wurde ein elektrischer Eigenverbrauch gemessen, der nur 19,5 W beträgt; dieser niedrige Wert wurde dadurch erreicht, daß auf elektronische Regeleinrichtungen erfindungsgemäße verzichtet werden kann und daß der Betriebsdruck für die Brennstoffzuführung und Luftzuführung niedrig gehalten werden kann.

Die elektrische Ausgangsleistung des Brennstoffzellensystems 10 ist allein von der Auswahl des Brennstoffzellenblocks 16 abhängig. Eine grundlegende Neukonzeption bei Änderung der Zielleistungsabgabe ist nicht notwendig. Es konnte auch ein Brennstoffzellensystem realisiert werden, welches eine Leistung bis zu 500 W abgeben kann.

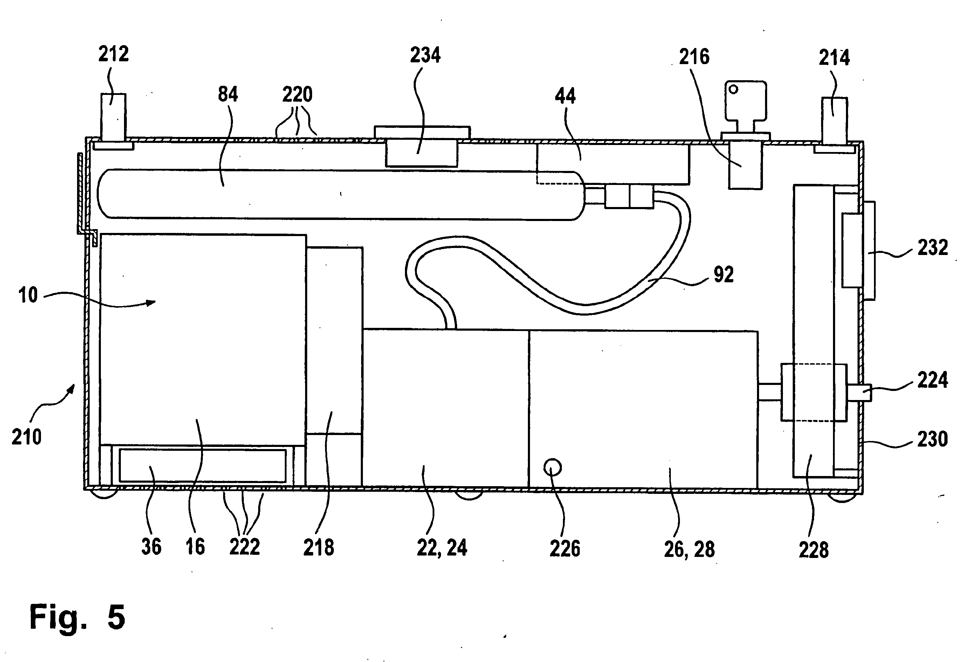

Das erfindungsgemäße Brennstoffzellensystem 10 läßt sich auf einfache Weise in einen kompakten geschlossenen Behälter 210 integrieren (Figur 5). Dieser Behälter weist einen Plusanschluß 212 auf, welcher mit dem Plusanschluß 138 verbunden ist. Ferner ist ein Minusanschluß 214 vorgesehen, welcher mit dem Minusanschluß 142 verbunden ist. Der Hauptschalter 134 ist beispielsweise durch einen Schlüsselschalter 216 gebildet, um die Inbetriebnahme des Brennstoffzellensystems 10 einzuleiten bzw. die Außerbetriebnahme zu bewirken.

Innerhalb des Behälters 210 sind die Wasserstoffspeicher 84 und 86 angeordnet, und ebenso die weitere Wasserstoffzuführung mit Druckminderer 22 und Ventilvorrichtung 24 zu dem Brennstoffzellenblock 16, vermittelt über entsprechende Anschlüsse 218.

Beispielsweise auf einer Oberseite des Behälters 210 sind Lüftungsschlitze 220 angeordnet, über die Wasserstoff aus dem Behälter 210 entweichen kann, wenn das Sicherheitsventil 104 diesen freigibt.

Auf einer Unterseite des Behälters 210 sind unterhalb des Brennstoffzellenblocks 16 Lüftungsschlitze 222 angeordnet, durch welche der zwischen den Lüftungsschlitzen und dem Brennstoffzellenblock 16 angeordneten Kühlungsvorrichtung 36 Umgebungsluft zuführbar ist.

Der Behälter 210 weist eine oder mehrere Luftansaugeöffnungen 224 auf, um Luft anzusaugen und über die Luftversorgungsvorrichtung 26 Luft dem Brennstoffzellenblock 16 zuzuführen.

Ferner ist an dem Behälter 210 eine Luftauslaßöffnung 226 angeordnet, welche dem Einstellventil 80 nachgeordnet ist.

Auf einer Platine 228, welche innerhalb des Behälters 210, d. h. in einem Innenraum seines Gehäuses 230, angeordnet ist, ist die elektronische Schaltung zur Steuerung der Inbetriebnahme und des Betriebs des Brennstoffzellensystems aufgenommen. Insbesondere trägt die Platine 228 die Steuerungsvorrichtung 50.

An einer Seitenwand sind entsprechende Anzeigeinstrumente 232 zur Überwachung des Betriebs des Brennstoffzellensystems 10 angeordnet, insbesondere läßt sich der vom Voltmeter 150, vom Amperemeter 152 jeweils ermittelte Wert, der vom Drucksensor 102 ermittelte Druck, der vom Drucksensor 74 ermittelte Druck und der vom Volumenstrommeßsensor 76 ermittelte Volumenstrom anzeigen.

Weiterhin ist der Akkumulator 44 in dem Gehäuse 230 angeordnet. Es kann auch noch eine Steckdose 234 vorgesehen sein, welche mit den Anschlußbuchsen 166 und 168 verbunden ist.

Der Behälter 210 mit dem darin angeordneten Brennstoffzellensystem 10 stellt eine tragbare Energieversorgungseinheit dar, aus welcher höchstens Luft und Wasserdampf als bei der Erzeugung von elektrischer Energie anfallende Emissionen austreten. Beispielsweise läßt es sich mit dem Brennstoffzellensystem 10, welches in dem Behälter 210 angeordnet ist, realisieren, bei einer Masse von 12 kg eine voll nutzbare Leistung von mindestens 1000 Wh zu erreichen. Im Vergleich dazu weist ein Akkumulator mit einer Leistung von 800 Wh, wovon nur 300 Wh nutzbar sind, eine Masse von 30 bis 35 kg auf.

## Patentansprüche

1. Brennstoffzellensystem, umfassend einen oder mehrere Brennstoffzellenblöcke (16), in denen chemische Energie in elektrische Energie umwandelbar ist, welche an einen Verbraucher (14) abgebbar ist, und eine Hilfsenergiequelle (44), welche die Hilfsenergie zur Inbetriebnahme des Brennstoffzellensystems bereitstellt,
**dadurch gekennzeichnet, daß** ein Schalter (40) vorgesehen ist, mittels welchem das Brennstoffzellensystem von Energieaufnahme aus der Hilfsenergiequelle (44) in einen Energieabgabebetrieb eines Brennstoffzellenblocks (16) umschaltbar ist, daß eine Zeitsteuerungsvorrichtung (178) vorgesehen ist, mittels welcher auf den Energieabgabebetrieb nach Inbetriebnahme des Brennstoffzellensystems umschaltbar ist, und daß die Zeitsteuerungsvorrichtung (178) den Schalter (40) zur Umschaltung auf Energieabgabebetrieb steuert, wobei ein voreingestellter Zeitraum nach Einleitung der Inbetriebnahme bis zum Umschalten auf Energieabgabebetrieb durch das Erreichen von fest vorgegebenen Zuführungsparametern von Brennstoff und Oxidator zu einem Brennstoffzellenblock (16) bestimmt ist.

2. Brennstoffzellensystem nach Anspruch 1, **dadurch gekennzeichnet, daß** Energieverbraucher (26, 34) des Brennstoffzellensystems von diesem selber mit Energie versorgt werden.

3. Brennstoffzellensystem nach Anspruch 2, **dadurch gekennzeichnet, daß** ein Luftverdichter (68) des Brennstoffzellensystems (10) von diesem mit Energie versorgt wird.

4. Brennstoffzellensystem nach Anspruch 2 oder 3, **dadurch gekennzeichnet, daß** eine Kühlvorrichtung (36) eines Brennstoffzellenblocks (16) von dem Brennstoffzellensystem mit Energie versorgt wird.

5. Brennstoffzellensystem nach einem der vorangehenden Ansprüche, **dadurch gekennzeichnet, daß** ein Brennstoffzellenblock Polymermembran-Brennstoffzellen umfaßt.

6. Brennstoffzellensystem nach Anspruch 5, **dadurch gekennzeichnet, daß** als Brennstoff Wasserstoff und als Oxidator Luftsauerstoff eingesetzt sind.

7. Brennstoffzellensystem nach einem der vorangehenden Ansprüche, **dadurch gekennzeichnet, daß** die Hilfsenergiequelle einen oder mehrere Akkumulatoren (44) umfaßt.

8. Brennstoffzellensystem nach Anspruch 7, **dadurch gekennzeichnet, daß** eine Akkumulatorladevorrichtung (172) vorgesehen ist, mittels der sich der oder die Akkumulatoren (44) während des Energieabgabebetriebs aufladen lassen.

9. Brennstoffzellensystem nach einem der vorangehenden Ansprüche, **dadurch gekennzeichnet, daß** die Hilfsenergiequelle extern mit Energie versorgbar ist.

10. Brennstoffzellensystem nach einem der vorangehenden Ansprüche, **dadurch gekennzeichnet, daß** eine Inbetriebnahme/Außerbetriebnahme des Brennstoffzellensystems automatisch durchführbar ist.

11. Brennstoffzellensystem nach Anspruch 10, **dadurch gekennzeichnet, daß** ein extern betätigbarer Schalter (134) zur Einleitung der Inbetriebnahme/Außerbetriebnahme des Brennstoffzellensystems vorgesehen ist.

12. Brennstoffzellensystem nach Anspruch 10 oder 11, **dadurch gekennzeichnet, daß** die Inbetriebnahmeparameter/Außerbetriebnahmeparameter des Brennstoffzellensystems fest eingestellt sind.

13. Brennstoffzellensystem nach Anspruch 12, **dadurch gekennzeichnet, daß** die Vorgaben einstellbar sind.

14. Brennstoffzellensystem nach einem der vorangehenden Ansprüche, **dadurch gekennzeichnet, daß** die Betriebsparameter des Brennstoffzellensystems mittels einer Einstellvorrichtung (22, 26, 30) fest eingestellt sind.

15. Brennstoffzellensystem nach Anspruch 14, **dadurch gekennzeichnet, daß** die Einstellvorrichtung einen Verdichterförderer (68) für den Oxidator umfaßt.

16. Brennstoffzellensystem nach Anspruch 14 oder 15, **dadurch gekennzeichnet, daß** mittels der Einstellvorrichtung Druck und Volumenstrom des einem Brennstoffzellenblock (16) zugeführten Oxidators fest einstellbar sind.

17. Brennstoffzellensystem nach einem der Ansprüche 14 bis 16, **dadurch gekennzeichnet, daß** die Einstellvorrichtung einen Druckminderer (96) für den Brennstoff umfaßt, welcher einem Brennstoffvorrat (20) nachgeschaltet ist.

18. Brennstoffzellensystem nach Anspruch 17, **dadurch gekennzeichnet, daß** mittels des Druckminderers (96) ein Druck des einem Brennstoffzellenblock (16) zugeführten Brennstoffs fest einstellbar ist.

19. Brennstoffzellensystem nach einem der Ansprüche 14 bis 18, **dadurch gekennzeichnet, daß** in einer Abführungsleitung für Brennstoff von einem Brennstoffzellenblock (16) ein Sperrventil (114) angeordnet ist.

20. Brennstoffzellensystem nach Anspruch 19, **dadurch gekennzeichnet, daß** das Sperrventil (114) getaktet schaltbar ist.

21. Brennstoffzellensystem nach Anspruch 20, **dadurch gekennzeichnet, daß** ein asymmetrischer Taktgeber (118) zur Ansteuerung des Sperrventils (114) vorgesehen ist.

22. Brennstoffzellensystem nach einem der vorangehenden Ansprüche, **dadurch gekennzeichnet, daß** eine Kühlungsvorrichtung (36) für den oder die Brennstoffzellenblöcke (16) vorgesehen ist, welche einen Lüfter (126) umfaßt.

23. Brennstoffzellensystem nach Anspruch 22, **dadurch gekennzeichnet, daß** ein Temperatursensor (130) an einem Brennstoffzellenblock (16) angeordnet ist.

24. Brennstoffzellensystem nach Anspruch 23, **dadurch gekennzeichnet, daß** die vom Temperatursensor (130) ermittelte Temperatur eine Steuergröße für den Lüfter (36) ist.

25. Brennstoffzellensystem nach einem der vorangehenden Ansprüche, **dadurch gekennzeichnet, daß** der Schalter (40) und/oder die Zeitsteuerungsvorrichtung (178) an einen Energiezwischenspeicher (154) gekoppelt ist.

26. Brennstoffzellensystem nach Anspruch 25, **dadurch gekennzeichnet, daß** der Energiezwischenspeicher einen Kondensator (154) umfaßt.

27. Brennstoffzellensystem nach einem der vorangehenden Ansprüche, **dadurch gekennzeichnet, daß** zwischen dem Schalter (40) für die Umschaltung auf Energieabgabebetrieb und einem Brennstoffzellenblock (16) ein unidirektionales Stromrichtungselement (144) angeordnet ist.

28. Brennstoffzellensystem nach einem der vorangehenden Ansprüche, **gekennzeichnet durch** eine Anordnung in einem kompakten Behälter (210), welcher mit Stromanschlüssen (212, 214) für einen externen Verbraucher versehen ist.

29. Brennstoffzellensystem nach Anspruch 28, **dadurch gekennzeichnet, daß** ein Brennstoffvorrat (20) in dem Behälter (210) angeordnet ist.

30. Verfahren zur Inbetriebnahme/Außerbetriebnahme eines Brennstoffzellensystems, welches einen oder mehrere Brennstoffzellenblöcke umfaßt, in denen chemische Energie in elektrische Energie umgewandelt wird, bei dem die zur Inbetriebnahme benötigte Hilfsenergie von einer Hilfsenergiequelle des Brennstoffzellensystems bereitgestellt wird und eine automatische Umschaltung auf einen Energieabgabebetrieb eines Brennstoffzellenblocks erfolgt, **dadurch gekennzeichnet, daß** nach Einleitung der Inbetriebnahme die Brennstoffzufuhr und die Oxidatorzufuhr geöffnet wird, daß mittels einer Zeitsteuerungsvorrichtung nach einer voreingestellten Zeitverzögerung nach Einleitung der Inbetriebnahme eine Umschaltung von Hilfsenergie auf den Energieabgabebetrieb erfolgt und daß die voreingestellte Zeitverzögerung durch Erreichen eines stabilen Arbeitspunkts für die Zuführungsparameter von Brennstoff und/oder Oxidator zu einem Brennstoffzellenblock bestimmt ist.

31. Verfahren nach Anspruch 30, **gekennzeichnet durch** einen oder mehrere Akkumulatoren zur Bereitstellung der Hilfsenergie.

32. Verfahren nach Anspruch 31, **dadurch gekennzeichnet, daß** der oder die Akkumulatoren während eines Energieabgabebetriebs des Brennstoffzellensystems aufladbar sind.

33. Verfahren nach einem der Ansprüche 30 bis 32, **dadurch gekennzeichnet, daß** die Inbetriebnahmeparameter/Außerbetriebnahmeparameter des Brennstoffzellensystems fest eingestellt sind.

34. Verfahren nach einem der Ansprüche 30 bis 33, **dadurch gekennzeichnet, daß** Zuführungsparameter von Brennstoff und Oxidator zu einem Brennstoffzellenblock fest eingestellt sind.

35. Verfahren nach Anspruch 33 oder 34, **dadurch gekennzeichnet, daß** die Zuschaltung/Wegschaltung von elektrischen Verbrauchern zeitlich gesteuert wird.

36. Verfahren nach einem der Ansprüche 33 bis 35, **dadurch gekennzeichnet, daß** die Kühlung eines Brennstoffzellenbloocks temperaturgesteuert wird.

37. Verfahren nach einem der Ansprüche 30 bis 36, **dadurch gekennzeichnet, daß** bei Umschaltung auf den Energieabgabebetrieb eine Kühlung für den oder die Brennstoffzellenblöcke eingeschaltet wird.

38. Verfahren nach einem der Ansprüche 30 bis 37, **dadurch gekennzeichnet, daß** nach oder bei Umschaltung auf den Energieabgabebetrieb eine Strommessung des Abgabestroms des Brennstoffzellensystems und/oder eine Spannungsmessung eingeschaltet wird.

## Claims

1. Fuel cell system, comprising one or more fuel cell blocks (16) in which chemical energy can be converted into electrical energy which can be delivered to a consumer (14), and a source of auxiliary energy (44) which provides the auxiliary energy for starting up the fuel cell system, **characterized in that** a switch (40) is provided for switching the fuel cell system over from energy intake from the source of auxiliary energy (44) to energy delivery mode of a fuel cell block (16), **in that** a time control device (178) is provided for switching over to energy delivery mode after start-up of the fuel cell system, and **in that** the time control device (178) controls the switch (40) for switching over to energy delivery mode, a preset period of time following initiation of the start-up until switchover to energy delivery mode being determined by feed parameters of fuel and oxidant to a fuel cell block (16), which are predetermined at fixed values, being reached.

2. Fuel cell system in accordance with claim 1, **characterized in that** energy consumers (26, 34) of the fuel cell system are supplied with energy by the fuel cell system itself.

3. Fuel cell system in accordance with claim 2, **characterized in that** an air compressor (68) of the fuel cell system (10) is supplied with energy by the fuel cell system.

4. Fuel cell system in accordance with claim 2 or 3, **characterized in that** a cooling device (36) of a fuel cell block (16) is supplied with energy by the fuel cell system.

5. Fuel cell system in accordance with any one of the preceding claims, **characterized in that** a fuel cell block comprises polymer membrane fuel cells.

6. Fuel cell system in accordance with claim 5, **characterized in that** hydrogen is used as fuel, and atmospheric oxygen is used as oxidant.

7. Fuel cell system in accordance with any one of the preceding claims, **characterized in that** the source of auxiliary energy comprises one or more accumulators (44).

8. Fuel cell system in accordance with claim 7, **characterized in that** an accumulator charging device (172) is provided, by means of which the accumulator or accumulators (44) can be charged during the energy delivery mode.

9. Fuel cell system in accordance with any one of the preceding claims, **characterized in that** the source of auxiliary energy can be supplied with energy externally.

10. Fuel cell system in accordance with any one of the preceding claims, **characterized in that** a start-up/shut-down of the fuel cell system can be carried out automatically.

11. Fuel cell system in accordance with claim 10, **characterized in that** an externally actuatable switch (134) is provided for initiating the start-up/shut-down of the fuel cell system.

12. Fuel cell system in accordance with claim 10 or 11, **characterized in that** the start-up parameters/shut-down parameters of the fuel cell system are set at fixed values.

13. Fuel cell system in accordance with claim 12, **characterized in that** the specifications are settable.

14. Fuel cell system in accordance with any one of the preceding claims, **characterized in that** the operating parameters of the fuel cell system are set at fixed values by a setting device (22, 26, 30).

15. Fuel cell system in accordance with claim 14, **characterized in that** the setting device comprises a compressor conveyor (68) for the oxidant.

16. Fuel cell system in accordance with claim 14 or 15, **characterized in that** pressure and volumetric flow rate of the oxidant fed to a fuel cell block (16) can be set at fixed values by the setting device.

17. Fuel cell system in accordance with any one of claims 14 to 16, **characterized in that** the setting device comprises a pressure reducer (96) for the fuel, which is connected downstream of a fuel reservoir (20).

18. Fuel cell system in accordance with claim 17, **characterized in that** a pressure of the fuel fed to a fuel cell block (16) can be set at a fixed value by the pressure reducer (96).

19. Fuel cell system in accordance with any one of claims 14 to 18, **characterized in that** a stop valve (114) is disposed in a discharge line for fuel from a fuel cell block (16).

20. Fuel cell system in accordance with claim 19, **characterized in that** the stop valve (114) is switchable in a clocked sequence.

21. Fuel cell system in accordance with claim 20, **characterized in that** an asymmetrical clock generator (118) is provided for actuating the stop valve (114).

22. Fuel cell system in accordance with any one of the preceding claims, **characterized in that** a cooling device (36) comprising a fan (126) is provided for the fuel cell block or fuel cell blocks (16).

23. Fuel cell system in accordance with claim 22, **characterized in that** a temperature sensor (130) is disposed on a fuel cell block (16).

24. Fuel cell system in accordance with claim 23, **characterized in that** the temperature determined by the temperature sensor (130) is a control variable for the fan (36).

25. Fuel cell system in accordance with any one of the preceding claims, **characterized in that** the switch (40) and/or the time control device (178) is/are coupled to an intermediate energy storage device (154).

26. Fuel cell system in accordance with claim 25, **characterized in that** the intermediate energy storage device comprises a capacitor (154).

27. Fuel cell system in accordance with any one of the preceding claims, **characterized in that** a unidirectional current direction element (144) is disposed between the switch (40) for switchover to energy delivery mode and a fuel cell block (16).

28. Fuel cell system in accordance with any one of the preceding claims, **characterized by** an arrangement in a compact container (210) which is provided with current connectors (212, 214) for an external consumer.

29. Fuel cell system in accordance with claim 28, **characterized in that** a fuel reservoir (20) is disposed in the container (210).

30. Method for starting up/shutting down a fuel cell system comprising one or more fuel cell blocks in which chemical energy is converted into electrical energy, wherein the auxiliary energy required for the start-up is provided by a source of auxiliary energy of the fuel cell system and a switchover to an energy delivery mode of a fuel cell block takes place automatically, **characterized in that** after initiation of the start-up, the fuel feed and the oxidant feed are opened, **in that** a switchover from auxiliary energy to energy delivery mode takes place by means of a time control device after a preset time delay following initiation of the start-up, and **in that** the preset time delay is determined by a stable operating point for the feed parameters of fuel and/or oxidant to a fuel cell block being reached.

31. Method in accordance with claim 30, **characterized by** one or more accumulators for providing the auxiliary energy.

32. Method in accordance with claim 31, **characterized in that** the accumulator or accumulators is or are chargeable during an energy delivery mode of the fuel cell system.

33. Method in accordance with any one of claims 30 to 32, **characterized in that** the start-up parameters/shut-down parameters of the fuel cell system are set at fixed values.

34. Method in accordance with any one of claims 30 to 33, **characterized in that** feed parameters of fuel and oxidant to a fuel cell block are set at fixed values.

35. Method in accordance with claim 33 or 34, **characterized in that** the connecting/disconnecting of electric consumers is controlled with respect to time.

36. Method in accordance with any one of claims 33 to 35, **characterized in that** the cooling of a fuel cell block is temperature-controlled.

37. Method in accordance with any one of claims 30 to 36, **characterized in that** a cooling for the fuel cell block or fuel cell blocks is activated upon switchover to the energy delivery mode.

38. Method in accordance with any one of claims 30 to 37, **characterized in that** a current measurement of the delivery current of the fuel cell system and/or a voltage measurement is/are activated after or upon switchover to the energy delivery mode.

## Revendications

1. Système de piles à combustible, comportant un ou plusieurs blocs de piles à combustible (16), dans lesquels l'énergie chimique peut être convertie en énergie électrique, laquelle peut être distribuée à un consommateur (14), et comportant une source d'énergie auxiliaire (44), laquelle met à disposition l'énergie auxiliaire pour la mise en service du système de piles à combustible,
**caractérisé en ce qu'**est prévu un commutateur (40), lequel permet de commuter le système de piles à combustible du mode d'absorption d'énergie depuis la source d'énergie auxiliaire (44) au mode de distribution d'énergie d'un bloc de piles à combustible (16), **en ce qu'**un dispositif de commande par temporisation (178) est prévu, lequel permet de passer en mode de distribution d'énergie suite à la mise en service du système de piles à combustible, et **en ce que** le dispositif de commande par temporisation (178) commande le commutateur (40) afin de passer en mode de distribution d'énergie, un intervalle de temps préréglé étant déterminé suite au lancement de la mise en service jusqu'à la commutation en mode de distribution d'énergie, lorsque des paramètres d'amenée, prédéterminés de manière fixe, de combustible et d'oxydant à un bloc de piles à combustible (16) ont été atteints.

2. Système de piles à combustible selon la revendication 1, **caractérisé en ce que** les consommateurs d'énergie (26, 34) du système de piles à combustible sont alimentés en énergie par ce dernier.

3. Système de piles à combustible selon la revendication 2, **caractérisé en ce qu'**un compresseur d'air (68) du système de piles à combustible (10) est alimenté en énergie par ce dernier.

4. Système de piles à combustible selon la revendication 2 ou 3, **caractérisé en ce qu'**un dispositif de refroidissement (36) d'un bloc de piles à combustible (16) est alimenté en énergie par le système de piles à combustible.

5. Système de piles à combustible selon l'une quelconque des revendications précédentes, **caractérisé en ce qu'**un bloc de piles à combustible comporte des piles à combustible à membrane polymère.

6. Système de piles à combustible selon la revendication 5, **caractérisé en ce que** de l'hydrogène est utilisé en tant que combustible et de l'oxygène atmosphérique est utilisé en tant qu'oxydant.

7. Système de piles à combustible selon l'une quelconque des revendications précédentes, **caractérisé en ce que** la source d'énergie auxiliaire comporte un ou plusieurs accumulateurs (44).

8. Système de piles à combustible selon la revendication 7, **caractérisé en ce qu'**un dispositif de charge d'accumulateur (172) est prévu, lequel permet de recharger le ou les accumulateurs (44) pendant le mode de distribution d'énergie.

9. Système de piles à combustible selon l'une quelconque des revendications précédentes, **caractérisé en ce que** la source d'énergie auxiliaire peut être alimentée en énergie de manière externe.

10. Système de piles à combustible selon l'une quelconque des revendications précédentes, **caractérisé en ce qu'**une mise en service/mise hors service du système de piles à combustible peut être réalisée de manière automatique.

11. Système de piles à combustible selon la revendication 10, **caractérisé en ce qu'**un commutateur (134) pouvant être actionné de manière externe est prévu pour déclencher la mise en service/mise hors service du système de piles à combustible.

12. Système de piles à combustible selon la revendication 10 ou 11, **caractérisé en ce que** les paramètres de mise en service/paramètres de mise hors service du système de piles à combustible sont réglés de manière fixe.

13. Système de piles à combustible selon la revendication 12, **caractérisé en ce que** les spécifications sont réglables.

14. Système de piles à combustible selon l'une quelconque des revendications précédentes, **caractérisé en ce que** les paramètres de fonctionnement du système de piles à combustible sont réglés de manière fixe au moyen d'un dispositif de réglage (22, 26, 30).

15. Système de piles à combustible selon la revendication 14, **caractérisé en ce que** le dispositif de réglage comporte un convoyeur de compresseur (68) pour l'oxydant.

16. Système de piles à combustible selon la revendication 14 ou 15, **caractérisé en ce que**, au moyen du dispositif de réglage, la pression et le débit volumétrique de l'oxydant amené à un bloc de piles à combustible (16) peuvent être réglés de manière fixe.

17. Système de piles à combustible selon l'une quelconque des revendications 14 à 16, **caractérisé en ce que** le dispositif de réglage comporte un réducteur de pression (96) pour le combustible, qui est monté en aval d'une réserve de combustible (20).

18. Système de piles à combustible selon la revendication 17, **caractérisé en ce que**, au moyen du réducteur de pression (96), une pression du combustible amené à un bloc de piles à combustible (16) peut être réglée de manière fixe.

19. Système de piles à combustible selon l'une quelconque des revendications 14 à 18, **caractérisé en ce qu'**une soupape d'arrêt (114) est agencée dans une conduite de sortie pour le combustible d'un bloc de piles à combustible (16).

20. Système de piles à combustible selon la revendication 19, **caractérisé en ce que** la soupape d'arrêt (114) peut être commutée par impulsions.

21. Système de piles à combustible selon la revendication 20, **caractérisé en ce qu'**un générateur d'impulsions asymétrique (118) est prévu pour l'excitation de la soupape d'arrêt (114).

22. Système de piles à combustible selon l'une quelconque des revendications précédentes, **caractérisé en ce qu'**un dispositif de refroidissement (36) est prévu pour le ou les bloc(s) de piles à combustible (16), ce dernier comportant un ventilateur (126).

23. Système de piles à combustible selon la revendication 22, **caractérisé en ce qu'**un capteur de température (130) est agencé sur un bloc de piles à combustible (16).

24. Système de piles à combustible selon la revendication 23, **caractérisé en ce que** la température déterminée par le capteur de température (130) est une grandeur de commande pour le ventilateur (36).

25. Système de piles à combustible selon l'une quelconque des revendications précédentes, **caractérisé en ce que** le commutateur (40) et/ou le dispositif de commande par temporisation (178) sont couplés à un accumulateur intermédiaire d'énergie (154).

26. Système de piles à combustible selon la revendication 25, **caractérisé en ce que** l'accumulateur intermédiaire d'énergie comporte un condensateur (154).

27. Système de piles à combustible selon l'une quelconque des revendications précédentes, **caractérisé en ce qu'**un élément de sens du courant unidirectionnel (144) est agencé entre le commutateur (40) pour la commutation en mode de distribution d'énergie et un bloc de piles à combustible (16).

28. Système de piles à combustible selon l'une quelconque des revendications précédentes, **caractérisé par** un système dans un récipient compact (210), lequel est équipé de connexions électriques (212, 214) pour un consommateur externe.

29. Système de piles à combustible selon la revendication 28, **caractérisé en ce qu'**une réserve de combustible (20) est disposée dans le récipient (210).

30. Procédé de mise en service/mise hors service d'un système de piles à combustible comportant un ou plusieurs blocs de piles à combustible, dans lesquels l'énergie chimique est convertie en énergie électrique, système dans lequel l'énergie auxiliaire nécessaire à la mise en service est mise à disposition par une source d'énergie auxiliaire du système de piles à combustible, et une commutation automatique dans un mode de distribution d'énergie d'un bloc de piles à combustible se produit, **caractérisé en ce que**, suite au début de la mise en service l'amenée de combustible et l'amenée d'oxydant sont ouvertes, suite à une temporisation préréglée après le début de la mise en service, une commutation de l'énergie auxiliaire en mode de distribution d'énergie a lieu au moyen d'un dispositif de commande par temporisation et **en ce que** la temporisation préréglée est déterminée lorsqu'un point de fonctionnement stable pour les paramètres d'amenée de combustible et/ou d'oxydant à un bloc de piles à combustible a été atteint.

31. Procédé selon la revendication 30, **caractérisé par** un ou plusieurs accumulateurs destinés à fournir l'énergie auxiliaire.

32. Procédé selon la revendication 31, **caractérisé en ce que** le ou les accumulateurs peuvent être rechargés pendant un mode de distribution d'énergie du système de piles à combustible.

33. Procédé selon l'une quelconque des revendications 30 à 32, **caractérisé en ce que** les paramètres de mise en service/paramètres de mise hors service du système de piles à combustible sont réglés de manière fixe.

34. Procédé selon l'une quelconque des revendications 30 à 33, **caractérisé en ce que** les paramètres d'amenée de combustible et d'oxydant à un bloc de piles à combustible sont réglés de manière fixe.

35. Procédé selon la revendication 33 ou 34, **caractérisé en ce que** la mise en circuit/mise hors circuit de consommateurs électriques est commandée dans le temps.

36. Procédé selon l'une quelconque des revendications 33 à 35, **caractérisé en ce que** le refroidissement d'un bloc de piles à combustible est commandé en fonction de la température.

37. Procédé selon l'une quelconque des revendications 30 à 36, **caractérisé en ce que**, lors de la commutation en mode de distribution d'énergie, un refroidissement pour le ou les blocs de piles à combustible est activé.

38. Procédé selon l'une quelconque des revendications 30 à 37, **caractérisé en ce qu'**après ou pendant la commutation en mode de distribution d'énergie, une mesure du courant du courant distribué du système de piles à combustible et/ou une mesure de tension est activée.
